# EUROPEAN PATENT APPLICATION

(11) **EP 4 615 036 A1**
(43) Date of publication of application: **10.09.2025**
(21) Application number: 23896829.1
(22) Date of filing: 29.11.2023
(51) Int. Cl.: H04W 24/02

(54) **COMMUNICATION METHOD AND APPARATUS**

(30) Priority: 30.11.2022 CN 202211528305
(71) Applicant: Huawei Technologies Co., Ltd., Shenzhen, Guangdong 518129 (CN)
(72) Inventor: SHI, Qiaolin, Shenzhen, Guangdong 518129 (CN); YANG, Pei, Shenzhen, Guangdong 518129 (CN); DAI, Xizeng, Shenzhen, Guangdong 518129 (CN); LIU, Jianghua, Shenzhen, Guangdong 518129 (CN)
(74) Representative: Isarpatent
(86) International application number: PCT/CN2023/135091
(87) International publication number: WO 2024/114685

(57) **Abstract**

This application relates to the field of communication technologies, and provides a communication method and apparatus, to improve accuracy of model management. The method includes: sending first information to a second communication apparatus, where the first information indicates a state of a first function of a first communication apparatus and/or a state of a second function of the first communication apparatus, the first function is a function of determining channel information based on any model, and the second function is a function of determining the channel information based on a first model, so that the second communication apparatus can determine, based on the state of the first function and/or the state of the second function, a strategy for managing the model, to accurately manage the model.

## Description

### CROSS-REFERENCE TO RELATED APPLICATIONS

This application claims priority to Chinese Patent Application No. 202211528305.0, filed with the China National Intellectual Property Administration on November 30, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

A terminal device may determine channel information based on a model (for example, an artificial intelligence (artificial intelligence, AI) model), and send the determined channel information to a network device, so that the network device can adjust sending of downlink data based on the determined channel information, to improve reliability of communication between the network device and the terminal device. For example, the network device may adjust, based on channel state information (channel state information, CSI) determined based on the model, a precoding matrix used to send the downlink data. The network device may send the downlink data to the terminal device based on an adjusted precoding matrix. The terminal device may decode the downlink data.

Currently, the network device usually manages a model of the terminal device based on a case in which the terminal device receives the downlink data, for example, switches a model used by the terminal device. There are many factors that affect receiving of the downlink data by the terminal device. The network device manages the model based only on the case in which the terminal device receives the downlink data. Consequently, accuracy of the model management is not high.

### SUMMARY

Embodiments of this application provide a communication method and apparatus, to improve accuracy of model management.

According to a first aspect, an embodiment of this application provides a communication method. The method may be performed by a first communication apparatus. The first communication apparatus is, for example, a terminal device, a software module in the terminal device, a chip system, or a software module in the chip system. For ease of description, an example in which the first communication apparatus performs the communication method is used below for description. The method includes: The first communication apparatus sends first information to a second communication apparatus. The first information indicates a state of a first function of the first communication apparatus and/or a state of a second function of the first communication apparatus. The first function is a function of determining channel information based on any model, and the second function is a function of determining the channel information based on a first model. The state includes valid or invalid, and the state indicates states/a state of the first function at a current moment and/or a future moment and states/a state of the second function at the current moment and/or a future moment. The first communication apparatus receives second information from the second communication apparatus. The second information indicates a strategy for managing one or more models. The strategy is related to the state of the first function and/or the state of the second function. The one or more models are used to determine the channel information, and the one or more models include the any model and/or the first model.

It should be understood that the model in embodiments of this application may be described as a function (for example, an AI function or a machine learning (machine learning, ML) function), a feature, an algorithm, or the like. The model includes, for example, an AI model or an ML model.

In this embodiment of this application, the second communication apparatus may determine the states/state of the first function and/or the second function based on the first information from the first communication apparatus, and determine the management model strategy based on the states/state of the first function and/or the second function, so that the first communication apparatus manages the model instead of managing the model based only on a case in which the first communication apparatus receives data. Therefore, the model can be managed more accurately in this embodiment of this application. In addition, the first communication apparatus can determine the state of the first function and/or the state of the second function based on more information about the first communication apparatus, so that the determined state of the first function and/or the determined state of the second function are/is accurate. This also helps improve accuracy of managing the model by the second communication apparatus. In addition, in some cases, the first information may further indicate the states/state of the first function and/or the second function at the future moment, so that the second communication apparatus can determine a model management strategy in a timely manner based on the states/state of the first function and/or the second function at the future moment. This helps improve timeliness of model management.

In a possible implementation, if the first information indicates that the second function is valid at the future moment and the current moment, the strategy indicates to perform at least one of the following: determining, by the first communication apparatus, the channel information by continuing using the first model; updating the first model; enhancing a first signal, where the first signal is used to determine an input of the first model; deactivating the first model; or switching a model used by the first communication apparatus to determine the channel information from the first model to a second model. Optionally, the updating the first model includes updating a model parameter of the first model, or updating the model parameter and a model structure of the first model, or the like.

In the foregoing implementation, when the first information indicates that the second function is valid at the current moment and the future moment, it indicates that the first communication apparatus may continue using the first model subsequently. Correspondingly, the strategy indicates to continue using the first model and/or strengthening the first model. In this way, the first communication apparatus may be prevented from frequently switching the model, and a capability of the first model may be further improved. Alternatively, the strategy may indicate to switch the first model and/or deactivate the first model, to enrich a possibility of the strategy in this case, so that the model management is more flexible.

In a possible implementation, if the first information indicates that the first function is invalid at the future moment or the current moment, the strategy indicates to perform at least one of the following: deactivating the first model; and stopping triggering a procedure related to the first function. The procedure related to the first function includes at least one of the following: a procedure of switching the first model; a procedure of updating the first model; a procedure of retraining a model used to determine the channel information, and a procedure of enhancing a first signal.

In the foregoing implementation, the first information indicates that the first function is invalid at the future moment or the current moment, and this indicates that the first communication apparatus cannot subsequently determine the channel information by using the model. Correspondingly, the strategy may indicate to stop using a model-related procedure. In this way, the first communication apparatus or the second communication apparatus does not waste resources on the model-related procedure. This helps save resources of the first communication apparatus or the second communication apparatus.

In a possible implementation, if the first information indicates that the first function is valid at the current moment and the second function is invalid at the future moment or the current moment, the strategy indicates to perform at least one of the following: deactivating the first model; switching a model used by the first communication apparatus to determine the channel information from the first model to a second model; a procedure of retraining a model used to determine the channel information; and stopping triggering a procedure related to the second function. The procedure related to the second function includes a procedure of updating the first model and/or a procedure of enhancing a first signal.

In the foregoing implementation, the first information indicates that the first function is valid at the current moment and the second function is invalid at the future moment or the current moment. This indicates that the first communication apparatus cannot subsequently determine the channel information by using the first model. Correspondingly, the strategy indicates to stop using a first model-related procedure. In this way, the first communication apparatus or the second communication apparatus cannot waste resources on the first model-related procedure. In addition, the strategy may indicate to switch the first model, or the like, so that the first communication apparatus can switch the model in a timely manner, to ensure that the first communication apparatus can still determine the channel information when the second function is invalid.

In a possible implementation, if the first information indicates that the first function is invalid at the future moment or the current moment, the second information further indicates that a first resource is invalid and/or another resource is invalid, the first resource is used by the first communication apparatus to send the channel information determined based on the any model, and the another resource is a resource related to the first function other than the first resource; and/or indicates to update uplink control information UCI sent by the first communication apparatus from first UCI to second UCI, where the first UCI indicates the channel information determined based on the any model, and the second UCI does not indicate the channel information determined based on the any model; or if the first information indicates that the second function is invalid at the future moment or the current moment, the second information further indicates that a first resource is invalid and/or another resource is invalid, the first resource is used by the first communication apparatus to send the channel information determined based on the first model, and the another resource is a resource related to the first function other than the first resource; and/or indicates to update uplink control information UCI sent by the first communication apparatus from first UCI to second UCI, where the first UCI indicates the channel information determined based on the first model, and the second UCI does not indicate the channel information determined based on the first model.

In the foregoing implementation, when the first function is invalid or is invalid at the future moment, and/or when the second function is invalid or is invalid at the future moment, the second information may indicate that the another resource and/or the first resource used by the first communication apparatus to send the determined channel information are/is invalid. In this way, the first communication apparatus cannot waste the first resource and/or the another resource, so that the second communication apparatus can use the first resource and/or the another resource for another purpose. This helps improve resource utilization. The second information may further indicate the first communication apparatus to switch sent UCI. In this way, the first communication apparatus can successfully send new UCI (for example, the second UCI), and the second communication apparatus can also successfully decode the second UCI.

In a possible implementation, when the first function is invalid at the future moment or the current moment, the second information may further indicate that another resource related to the first function is invalid. The another resource is a resource related to the first function other than the first resource. The another resource is, for example, a resource used by the first communication apparatus to receive the first signal. In this way, the second communication apparatus may use another resource for another purpose, to further improve resource utilization.

In a possible implementation, before the receiving second information from the second communication apparatus, the method further includes: if the state of the first function is updated from invalid to valid, sending third information to the second communication apparatus, where the third information indicates an identifier of at least one model or model-related configuration information, the model-related configuration information is used to determine the at least one model, the at least one model includes a model applicable to the first communication apparatus for determining the channel information, the strategy is further related to the at least one model, the strategy indicates the first communication apparatus to determine the channel information by using a third model, and the third model belongs to the at least one model.

In the foregoing implementation, the second communication apparatus may determine, based on the state of the first function and/or the state of the second function and the at least one model that may be used by the first communication apparatus to determine the channel information, the strategy for managing the one or more models. Determining the strategy based on more information can further improve accuracy of the strategy for managing the model, to effectively manage the model. In addition, when the state of the first function is updated from invalid to valid, the second communication apparatus may directly determine, for the first communication apparatus, a model (for example, the third model) used to determine the channel information, so that the first communication apparatus can determine the channel information in a timely manner. In addition, in the foregoing implementation, the second communication apparatus triggers, when the first communication apparatus has the first function, the model for determining the channel information by the first communication apparatus. This can prevent the second communication apparatus from triggering, when the first communication apparatus does not have the first function, a procedure related to the first function, to reduce a quantity of times of interaction between the first communication apparatus and the second communication apparatus, and save resources of the first communication apparatus and the second communication apparatus. In addition, the first communication apparatus may directly notify the second communication apparatus of the identifier of the at least one model, or the first communication apparatus notifies the second communication apparatus of AI-related configuration information, to determine the at least one model. This is equivalent to providing two models registration manners.

In a possible implementation, the first information further indicates a confidence level of the channel information determined based on the first model, and the strategy is further related to the confidence level.

In the foregoing implementation, the second communication apparatus may determine the strategy based on the state of the first function and/or the state of the second function and the confidence level of the first model. In this way, the second communication apparatus may determine the strategy with reference to more information. This helps manage the model more accurately.

In a possible implementation, if the first information indicates that the second function is valid at the current moment and the future moment and the confidence level is less than or equal to a first threshold, the strategy indicates to perform at least one of the following: determining, by the first communication apparatus, the channel information by continuing using the first model; updating the first model; enhancing a first signal, where the first signal is used to determine an input of the first model; deactivating the first model; or switching a model used by the first communication apparatus to determine the channel information from the first model to a second model.

In the foregoing implementation, if the first information indicates that the second function is valid at the current moment and the future moment, and the confidence level of the first model is less than or equal to the first threshold, it indicates that the first communication apparatus may continue using the first model, but the confidence level of the first model is low. Correspondingly, the strategy indicates to continue using the first model, so as to reduce a frequency of switching a model by the first communication apparatus. In addition, the strategy may indicate to update the first model or enhance the first signal. This helps improve a capability of the first model, and can also improve accuracy of the channel information determined by the first communication apparatus. Alternatively, the strategy may indicate to deactivate the first model or switch the first model. In this way, a case in which the accuracy of the determined channel information is low because the first communication apparatus continues using the first model can be avoided.

In a possible implementation, if the first information indicates that the second function is valid at the current moment and the future moment and the confidence level is greater than a first threshold, the strategy indicates to perform at least one of the following: determining, by the first communication apparatus, the channel information by continuing using the first model; updating the first model; enhancing a first signal; deactivating the first model; or switching a model used by the first communication apparatus to determine the channel information from the first model to a second model.

In the foregoing implementation, if the first information indicates that the second function is valid at the current moment and the future moment, and the confidence level of the first model is greater than the first threshold, it indicates that the first communication apparatus may continue using the first model, and the confidence level of the first model is high. Correspondingly, the strategy indicates to continue using the first model, to prevent the first communication apparatus from frequently switching the model. In addition, the strategy may indicate to update the first model or enhance the first signal. This helps improve the capability of the first model, and can improve accuracy of the channel information determined by the first communication apparatus. Certainly, the strategy may alternatively indicate to deactivate the first model, or switch the first model to the second model. In this way, flexibility of managing the first model is improved.

In a possible implementation, the method further includes: if a first condition is met, determining that the second function is invalid at the current moment, where the first condition includes: the first communication apparatus does not support running of the first model; and/or the confidence level of the channel information determined by the first communication apparatus by using the first model is less than a second threshold.

In the foregoing implementation, several manners of determining that the second function is invalid at the current moment are provided. The first communication apparatus may determine, with reference to information about the first communication apparatus and a requirement of the first communication apparatus, that the second function is invalid at the current moment, so that a result of determining that the second function is invalid at the current moment better meets the requirement of the first communication apparatus.

In a possible implementation, the sending first information to a second communication apparatus includes: sending third UCI to the second communication apparatus, where the third UCI includes the first information; or sending the first information to the second communication apparatus on a second resource, where the second resource is related to a resource for sending third UCI by the first communication apparatus.

In the foregoing implementation, two manners of sending the first information are provided. For example, the first communication apparatus may include the first information in the third UCI, and reuse the UCI to send the first information. This helps reduce interaction between the first communication apparatus and the second communication apparatus. Alternatively, for example, the second resource for sending the first information by the first communication apparatus may be related to a resource for sending the third UCI, so that the first communication apparatus may determine the second resource based on the resource for sending the third UCI, or may determine, based on the second resource, the resource for sending the third UCI. In this way, the second communication apparatus may not need to separately configure, for the first communication apparatus, the second resource and the resource for sending the third UCI. This helps reduce a quantity of times of interaction between the first communication apparatus and the second communication apparatus. In addition, the second communication apparatus may flexibly configure the second resource by flexibly configuring a relationship between the second resource and the resource for sending the third UCI by the first communication apparatus. In this way, the second communication apparatus can flexibly coordinate time for sending the first information and a resource occupied for sending the first information and the third UCI.

For example, an indicated frequency of the second resource may be different from an indicated frequency of the resource for sending the third UCI by the first communication apparatus, or the indicated frequency of the second resource may be the same as the indicated frequency of the resource for sending the third UCI by the first communication apparatus. The indicated frequency of the second resource may be different from the indicated frequency of the resource for sending the third UCI by the first communication apparatus. For example, the indicated frequency of the second resource is higher than the indicated frequency of the resource for sending the third UCI by the first communication apparatus.

In a possible implementation, the one or more models include any one of the following models: a model used to determine channel state information CSI; a model used to determine a beam; a model used to determine a channel type; a model used to determine information about compressed CSI; or a model used to compress CSI.

In the foregoing implementation, a possible implementation of the model is provided. In other words, the model management manner in this embodiment of this application is applicable to management of a plurality of models, to improve applicability of the model management.

According to a second aspect, an embodiment of this application provides a communication method. The method may be performed by a second communication apparatus. The second communication apparatus is, for example, a network device, a software module in the network device, a chip system, or a software module in the chip system. For ease of description, an example in which the second communication apparatus performs the communication method is used below for description. The method includes: The second communication apparatus receives first information from a first communication apparatus. The first information indicates a state of a first function of the first communication apparatus and/or a state of a second function of the first communication apparatus. The first function is a function of determining channel information based on any model, and the second function is a function of determining the channel information based on a first model. The state includes valid or invalid, and the state indicates states/a state of the first function at a current moment and/or a future moment and states/a state of the second function at the current moment and/or a future moment. The second communication apparatus sends second information to the first communication apparatus. The second information indicates a strategy for managing one or more models. The strategy is related to the state of the first function and/or the state of the second function. The one or more models are used to determine the channel information, and the one or more models include the any model and/or the first model.

In a possible implementation, if the first information indicates that the second function is valid at the future moment and the current moment, the strategy indicates to perform at least one of the following: determining, by the first communication apparatus, the channel information by continuing using the first model; updating the first model; enhancing a first signal, where the first signal is used to determine an input of the first model; deactivating the first model; or switching a model used by the first communication apparatus to determine the channel information from the first model to a second model.

In a possible implementation, if the first information indicates that the first function is invalid at the future moment or the current moment, the strategy indicates to perform at least one of the following: deactivating the first model; and stopping triggering a procedure related to the first function. The procedure related to the first function includes at least one of the following: a procedure of switching the first model; a procedure of updating the first model; a procedure of retraining a model used to determine the channel information, and a procedure of enhancing a first signal.

In a possible implementation, if the first information indicates that the first function is valid at the current moment and the second function is invalid at the future moment or the current moment, the strategy indicates to perform at least one of the following: deactivating the first model; switching a model used by the first communication apparatus to determine the channel information from the first model to a second model; a procedure of retraining a model used to determine the channel information; and stopping triggering a procedure related to the second function. The procedure related to the second function includes a procedure of updating the first model and/or a procedure of enhancing a first signal.

In a possible implementation, if the first information indicates that the first function is invalid at the future moment or the current moment, the second information further indicates that a first resource is invalid and/or another resource is invalid, the first resource is used by the first communication apparatus to send the channel information determined based on the any model, and the another resource is a resource related to the first function other than the first resource; and/or indicates to update uplink control information UCI sent by the first communication apparatus from first UCI to second UCI, where the first UCI indicates the channel information determined based on the any model, and the second UCI does not indicate the channel information determined based on the any model; or if the first information indicates that the second function is invalid at the future moment or the current moment, the second information further indicates that a first resource is invalid and/or another resource is invalid, the first resource is used by the first communication apparatus to send the channel information determined based on the first model, and the another resource is a resource related to the first function other than the first resource; and/or indicates to update uplink control information UCI sent by the first communication apparatus from first UCI to second UCI, where the first UCI indicates the channel information determined based on the first model, and the second UCI does not indicate the channel information determined based on the first model.

In a possible implementation, if the first information indicates that the first function is updated from invalid to valid, before the sending second information to the first communication apparatus, the method further includes: receiving third information from the first communication apparatus, where the third information indicates an identifier of at least one model or model-related configuration information, the model-related configuration information is used to determine the at least one model, the at least one model includes a model applicable to the first communication apparatus for determining the channel information, the strategy is further related to the at least one model, the strategy indicates the first communication apparatus to determine the channel information by using a third model, and the third model belongs to the at least one model.

In a possible implementation, the first information further indicates a confidence level of the channel information determined based on the first model, and the strategy is further related to the confidence level.

In a possible implementation, if the first information indicates that the second function is valid at the current moment and the future moment and the confidence level is less than or equal to a first threshold, the strategy indicates to perform at least one of the following: determining, by the first communication apparatus, the channel information by continuing using the first model; updating the first model; enhancing a first signal, where the first signal is used to determine an input of the first model; deactivating the first model; switching a model used by the first communication apparatus to determine the channel information from the first model to a second model; and retraining a model used to determine the channel information; or if the first information indicates that the second function is valid at the current moment and the future moment and the confidence level is greater than a first threshold, the strategy indicates to perform at least one of the following: determining, by the first communication apparatus, the channel information by continuing using the first model; updating the first model; enhancing a first signal; deactivating the first model; or switching a model used by the first communication apparatus to determine the channel information from the first model to a second model.

In a possible implementation, the first information further indicates a confidence level of the channel information determined by the first communication apparatus by using the first model, and before the sending second information to the first communication apparatus, the method further includes: determining that a second condition is met, where the second condition includes at least one of the following: a cumulative quantity of times that the confidence level is less than or equal to the first threshold is greater than or equal to a first quantity of times; a cumulative quantity of times that the confidence level is greater than the first threshold is less than or equal to a second quantity of times; continuous duration in which the confidence level is less than or equal to the first threshold is greater than or equal to first duration; and continuous duration in which the confidence level is greater than the first threshold is less than or equal to second duration.

In a possible implementation, the receiving first information from a first communication apparatus includes: receiving third UCI from the first communication apparatus, where the third UCI includes the first information; or receiving the first information from the first communication apparatus on a second resource, where the second resource is related to a resource for receiving third UCI from the first communication apparatus.

In a possible implementation, the one or more models include any one of the following: a model used to determine channel state information CSI; a model used to determine a beam; a model used to determine a channel type; a model used to determine information about compressed CSI; or a model used to compress CSI.

According to a third aspect, an embodiment of this application provides a communication method. The method may be performed by a first communication apparatus. The first communication apparatus is, for example, a terminal device, a software module in the terminal device, a chip system, or a software module in the chip system. For ease of description, an example in which the first communication apparatus performs the communication method is used below for description. The method includes: If a state of a first function is updated from invalid to valid, the first communication apparatus sends first information to a second communication apparatus. The first information indicates that the first function is valid at a current moment, and the first function is a function of determining channel information by the first communication apparatus based on any model. The first communication apparatus sends third information to the second communication apparatus. The third information indicates an identifier of at least one model and model-related configuration information, the model-related configuration information is used to determine the at least one model, and the at least one model includes a model applicable to the first communication apparatus for determining the channel information. The first communication apparatus receives second information from the second communication apparatus. The second information indicates a strategy for managing one or more models, the strategy is related to the first function and the at least one model, the strategy indicates the first communication apparatus to determine the channel information by using a second model, the second model belongs to the at least one model, the one or more models are used to determine the channel information, and the one or more models include the any one model.

In this embodiment of this application, the second communication apparatus may determine, based on the state of the first function and the at least one model, the strategy for managing the model. Because the state of the first function and the at least one model are provided by the first communication apparatus, accuracy of the state of the first function and the at least one model can be improved. This also helps improve accuracy of determining the strategy by the second communication apparatus, and helps improve accuracy of model management. In addition, in this embodiment of this application, when determining that the first communication apparatus has a function of determining the channel information, the second communication apparatus may indicate, to the first communication apparatus in a timely manner, the model used to determine the channel information, so that the first communication apparatus can determine the channel information in a timely manner based on the model.

In addition, when the first function is invalid at the current moment, the second communication apparatus is prevented from interacting with the first communication apparatus about a procedure related to the first function. In this way, a quantity of times of interaction between the first communication apparatus and the second communication apparatus can be reduced, to help save resources of the first communication apparatus and the second communication apparatus.

According to a fourth aspect, an embodiment of this application provides a communication method. The method may be performed by a second communication apparatus. The second communication apparatus is, for example, a network device, a software module in the network device, a chip system, or a software module in the chip system. For ease of description, an example in which the second communication apparatus performs the communication method is used below for description. The method includes: The second communication apparatus receives first information from a first communication apparatus. The first information indicates that the first function is valid at a current moment, and the first function is a function of determining channel information by the first communication apparatus based on any model. The second communication apparatus receives third information from the first communication apparatus. The third information indicates an identifier of at least one model and model-related configuration information, the model-related configuration information is used to determine the at least one model, and the at least one model includes a model applicable to the first communication apparatus for determining the channel information. The second communication apparatus sends second information to the first communication apparatus. The second information indicates a strategy for managing one or more models, the strategy is related to the first function and the at least one model, the strategy indicates the first communication apparatus to determine the channel information by using a second model, the second model belongs to the at least one model, the one or more models are used to determine the channel information, and the one or more models include the any one model.

According to a fifth aspect, an embodiment of this application provides a communication method. The method may be performed by a first communication apparatus or a second communication apparatus. For implementations of the first communication apparatus and the second communication apparatus, refer to the content described above. The method includes: determining whether a second condition is met, where the second condition includes at least one of the following: a cumulative quantity of times that a confidence level of channel information determined based on a first model is less than or equal to a first threshold is greater than or equal to a first quantity of times; a cumulative quantity of times that the confidence level is greater than the first threshold is less than or equal to a second quantity of times; continuous duration in which the confidence level is less than or equal to the first threshold is greater than or equal to first duration; and continuous duration in which the confidence level is greater than the first threshold is less than or equal to second duration; and if the second condition is met, determining to perform any one of: deactivating the first model, switching the first model to a second model, and updating the first model, where the first model is a model for currently determining the channel information.

In this embodiment of this application, the first communication apparatus or the second communication apparatus may determine, based on the confidence level of the first model, whether to deactivate the first model or switch the first model. This is equivalent to directly determining, based on performance of the first model, a strategy for managing the first model. This helps manage the first model more accurately. In addition, in this embodiment of this application, after the confidence level of the first model is less than or equal to the first threshold for specific duration and/or a specific quantity of times, it is determined to switch the first model or deactivate the first model. In this way, a frequency of deactivating or switching the first model by the first communication apparatus can be reduced. In addition, in this embodiment of this application, the first communication apparatus may determine to perform deactivation, switching, or the like on the first model, and does not need to interact with the second communication apparatus, to reduce a quantity of times of interaction between the first communication apparatus and the second communication apparatus.

According to a sixth aspect, an embodiment of this application provides a communication method. The method may be performed by a first communication apparatus. The first communication apparatus is, for example, a terminal device, a software module in the terminal device, a chip system, or a software module in the chip system. For ease of description, an example in which the second communication apparatus performs the communication method is used below for description. The method includes: The first communication apparatus sends third UCI to a second communication apparatus. The third UCI includes first information. The first information indicates at least one of a state of a first function of the first communication apparatus, a state of a second function, and a confidence level of channel information determined based on a first model. The first function is a function of determining the channel information based on any model, and the second function is a function of determining the channel information based on the first model. The state includes valid or invalid, and the state indicates states/a state of the first function at a current moment and/or a future moment and states/a state of the second function at the current moment and/or a future moment. The first communication apparatus receives second information from the second communication apparatus. The second information indicates a strategy for managing one or more models. The strategy is related to the at least one of the state of the first function, the state of the second function, and the confidence level. The one or more models are used to determine the channel information, and the one or more models include the first model.

In this embodiment of this application, the first communication apparatus or the second communication apparatus may determine, based on the at least one of the confidence level of the first model, the state of the first function, or the state of the second function, the strategy for managing the model. This helps manage the first model more accurately. In addition, in this embodiment of this application, the first information is carried in the UCI, and the first communication apparatus does not need to indicate the at least one of the confidence level of the first model, the state of the first function, or the state of the second function to the second communication apparatus through dedicated information. In this way, a quantity of times of interaction between the first communication apparatus and the second communication apparatus can be reduced.

According to a seventh aspect, an embodiment of this application provides a communication method. The method may be performed by a second communication apparatus. The second communication apparatus is, for example, a terminal device, a software module in the terminal device, a chip system, or a software module in the chip system. For ease of description, an example in which the second communication apparatus performs the communication method is used below for description. The method includes: receiving third UCI, where the third UCI includes first information, the first information indicates at least one of a state of a first function of a first communication apparatus, a state of a second function, and a confidence level of channel information determined based on a first model, the first function is a function of determining the channel information based on any model, the second function is a function of determining the channel information based on the first model, the state includes valid or invalid, and the state indicates states/a state of the first function at a current moment and/or a future moment and states/a state of the second function at the current moment and/or a future moment; and sending, by the second communication apparatus second information to the first communication apparatus, where the second information indicates a strategy for managing one or more models, the strategy is related to the at least one of the state of the first function, the state of the second function, and the confidence level, the one or more models are used to determine the channel information, and the one or more models include the first model.

According to an eighth aspect, an embodiment of this application provides a communication apparatus. The communication apparatus may be the first communication apparatus in the first aspect. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

The transceiver module is configured to: send first information to a second communication apparatus under control of the processing module, where the first information indicates a state of a first function of the first communication apparatus and/or a state of a second function of the first communication apparatus, the first function is a function of determining channel information based on any model, the second function is a function of determining the channel information based on a first model, the state includes valid or invalid, and the state indicates states/a state of the first function at a current moment and/or a future moment and states/a state of the second function at the current moment and/or a future moment; and receive second information from the second communication apparatus, where the second information indicates a strategy for managing one or more models, the strategy is related to the state of the first function and/or the state of the second function, the one or more models are used to determine the channel information, and the one or more models include the any model and/or the first model.

In an optional implementation, the communication apparatus includes a storage module. The processing module can be coupled to the storage module, and execute a program or instructions in the storage module, to enable the communication apparatus to perform a function of the first communication apparatus.

According to a ninth aspect, an embodiment of this application provides a communication apparatus. The communication apparatus may be the second communication apparatus in the second aspect. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module is configured to: receive first information from a first communication apparatus under control of the processing module, where the first information indicates a state of a first function of the first communication apparatus and/or a state of a second function of the first communication apparatus, the first function is a function of determining channel information based on any model, the second function is a function of determining the channel information based on a first model, the state includes valid or invalid, and the state indicates states/a state of the first function at a current moment and/or a future moment and states/a state of the second function at the current moment and/or a future moment; and send second information to the first communication apparatus, where the second information indicates a strategy for managing one or more models, the strategy is related to the state of the first function and/or the state of the second function, the one or more models are used to determine the channel information, and the one or more models include the any model and/or the first model.

In an optional implementation, the communication apparatus includes a storage module. The processing module can be coupled to the storage module, and execute a program or instructions in the storage module, to enable the communication apparatus to perform a function of the second communication apparatus.

According to a tenth aspect, an embodiment of this application provides a communication apparatus. The communication apparatus may be the first communication apparatus in the third aspect. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, if a state of a first function is updated from invalid to valid, the transceiver module is configured to: send first information to a second communication apparatus under control of the processing module, where the first information indicates that the first function is valid at a current moment, and the first function is a function of determining channel information by the first communication apparatus based on any model; send third information to the second communication apparatus, where the third information indicates an identifier of at least one model and model-related configuration information, the model-related configuration information is used to determine the at least one model, and the at least one model includes a model applicable to the first communication apparatus for determining the channel information; and receive second information from the second communication apparatus, where the second information indicates a strategy for managing one or more models, the strategy is related to the state of the first function and/or a state of a second function and the at least one model, the strategy indicates the first communication apparatus to determine the channel information by using a second model, the second model belongs to the at least one model, the one or more models are used to determine the channel information, and the one or more models include the any one model.

In an optional implementation, the communication apparatus includes a storage module. The processing module can be coupled to the storage module, and execute a program or instructions in the storage module, to enable the communication apparatus to perform a function of the first communication apparatus.

According to an eleventh aspect, an embodiment of this application provides a communication apparatus. The communication apparatus may be the second communication apparatus in the fourth aspect. The communication apparatus includes a corresponding means (means) or module configured to perform the fourth aspect or any possible implementation. For example, the communication apparatus includes a processing module (sometimes also referred to as a processing unit) and a transceiver module (sometimes also referred to as a transceiver unit).

The transceiver module is configured to: receive first information from a first communication apparatus under control of the processing module, where the first information indicates that a first function is valid at a current moment, and the first function is a function of determining channel information by the first communication apparatus based on any model; receive third information from the first communication apparatus, where the third information indicates an identifier of at least one model and model-related configuration information, the model-related configuration information is used to determine the at least one model, and the at least one model includes a model applicable to the first communication apparatus for determining the channel information; and send second information to the first communication apparatus, where the second information indicates a strategy for managing one or more models, the strategy is related to the state of the first function and/or a state of a second function and the at least one model, the strategy indicates the first communication apparatus to determine the channel information by using a second model, the second model belongs to the at least one model, the one or more models are used to determine the channel information, and the one or more models include the any one model.

In an optional implementation, the communication apparatus includes a storage module. The processing module can be coupled to the storage module, and execute a program or instructions in the storage module, to enable the communication apparatus to perform a function of the second communication apparatus.

According to a twelfth aspect, an embodiment of this application provides a communication apparatus. The communication apparatus may be the first communication apparatus or the second communication apparatus in the fifth aspect. The communication apparatus includes a corresponding means (means) or module configured to perform the fifth aspect or any possible implementation. For example, the communication apparatus includes a processing module (sometimes also referred to as a processing unit). Optionally, the communication apparatus further includes a transceiver module (sometimes also referred to as a transceiver unit).

The processing module is configured to: determine whether a second condition is met, where the second condition includes at least one of the following: a cumulative quantity of times that a confidence level of channel information determined based on a first model is less than or equal to a first threshold is greater than or equal to a first quantity of times; a cumulative quantity of times that the confidence level is greater than the first threshold is less than or equal to a second quantity of times; continuous duration in which the confidence level is less than or equal to the first threshold is greater than or equal to first duration; and continuous duration in which the confidence level is greater than the first threshold is less than or equal to second duration; and if the second condition is met, determine to perform any one of: deactivating the first model, switching the first model to a second model to determine the channel information, and updating the first model. Optionally, the transceiver module is configured to receive the confidence level.

In an optional implementation, the communication apparatus includes a storage module. The processing module can be coupled to the storage module, and execute a program or instructions in the storage module, to enable the communication apparatus to perform a function of the first communication apparatus or the second communication apparatus.

According to a thirteenth aspect, an embodiment of this application provides a communication apparatus. The communication apparatus may be the first communication apparatus in the sixth aspect. The communication apparatus includes a corresponding means (means) or module configured to perform the sixth aspect or any possible implementation. For example, the communication apparatus includes a processing module (sometimes also referred to as a processing unit) and a transceiver module (sometimes also referred to as a transceiver unit).

The transceiver module is configured to: send third UCI to a second communication apparatus under control of the processing module, where the third UCI includes first information, the first information indicates at least one of a state of a first function of the first communication apparatus, a state of a second function, and a confidence level of channel information determined based on a first model, the first function is a function of determining the channel information based on any model, the second function is a function of determining the channel information based on the first model, the state includes valid or invalid, and the state indicates states/a state of the first function at a current moment and/or a future moment and states/a state of the second function at the current moment and/or a future moment; and receive second information from the second communication apparatus, where the second information indicates a strategy for managing one or more models, the strategy is related to the at least one of the state of the first function, the state of the second function, and the confidence level, the one or more models are used to determine the channel information, and the one or more models include the first model.

In an optional implementation, the communication apparatus includes a storage module. The processing module can be coupled to the storage module, and execute a program or instructions in the storage module, to enable the communication apparatus to perform a function of the first communication apparatus.

According to a fourteenth aspect, an embodiment of this application provides a communication apparatus. The communication apparatus may be the second communication apparatus in the seventh aspect. The communication apparatus includes a corresponding means (means) or module configured to perform the seventh aspect or any possible implementation. For example, the communication apparatus includes a processing module (sometimes also referred to as a processing unit) and a transceiver module (sometimes also referred to as a transceiver unit).

The transceiver module is configured to: receive third UCI under control of the transceiver module, where the third UCI includes first information, the first information indicates at least one of a state of a first function of a first communication apparatus, a state of a second function, and a confidence level of channel information determined based on a first model, the first function is a function of determining the channel information based on any model, the second function is a function of determining the channel information based on the first model, the state includes valid or invalid, and the state indicates states/a state of the first function at a current moment and/or a future moment and states/a state of the second function at the current moment and/or a future moment; and send second information to the first communication apparatus, where the second information indicates a strategy for managing one or more models, the strategy is related to the at least one of the state of the first function, the state of the second function, and the confidence level, the one or more models are used to determine the channel information, and the one or more models include the first model.

According to a fifteenth aspect, an embodiment of this application provides a communication apparatus, including a processor and a communication interface. The communication interface is configured to: receive a signal from another apparatus other than the communication apparatus and transmit the signal to the processor, or send a signal from the processor to another apparatus other than the communication apparatus. The processor executes code instructions by using a logic circuit to implement the method according to any one of the first aspect to the seventh aspect.

According to a sixteenth aspect, an embodiment of this application provides a chip system. The chip system includes a processor and an interface. The processor is configured to invoke instructions from the interface and run the instructions. When the processor executes the instructions, the method according to any one of the first aspect to the seventh aspect is implemented.

According to a seventeenth aspect, a computer-readable storage medium is provided. The computer-readable storage medium is configured to store a computer program or instructions. When the computer program or the instructions are run, the method according to any one of the first aspect to the seventh aspect is implemented.

According to an eighteenth aspect, a computer program product including instructions is provided. When the computer program product runs on a computer, the method according to any one of the first aspect to the seventh aspect is implemented.

For beneficial effects of the second aspect to the eighteenth aspect, refer to the beneficial effects described in the first aspect. Details are not described herein again.

### BRIEF DESCRIPTION OF DRAWINGS

FIG. 1 is a diagram of an application scenario according to an embodiment of this application;
FIG. 2A is a schematic flowchart of a communication method according to an embodiment of this application;
FIG. 2B is a diagram of determining channel information based on a first model according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of yet another communication method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
1. A terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect people, objects, machines, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, a robot, and the like. The terminal device is, for example, a vehicle-mounted device, a wearable device, a computing device, another processing device connected to a wireless modem, a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), or a machine type communication (machine type communication, MTC) terminal. The terminal device may be sometimes referred to as user equipment (user equipment, UE), a terminal, an access station, a UE station, a remote station, a wireless communication device, a user apparatus, or the like.
2. A network device includes, for example, an access network element (or referred to as an access network device) and/or a core network element (or referred to as a core network device).

The access network element is a device having a wireless transceiver function, and is configured to communicate with the terminal device. The access network element includes but is not limited to a base station (a BTS, a NodeB, an eNodeB/eNB, or a gNodeB/gNB) and a transmission reception point (transmission reception point, TRP) in the foregoing communication system, a subsequent evolved base station in 3GPP, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology mentioned above, or may support networks using different access technologies mentioned above. The base station may include one or more co-site or non-co-site transmission reception points. Alternatively, the network device may be a radio controller or a central unit (central unit, CU) in a cloud radio access network (cloud radio access network, C(R)AN) scenario, and may also be referred to as an aggregation unit and/or a distributed unit (distributed unit, DU). Alternatively, the network device may be a server, a wearable device, a vehicle-mounted device, or the like. For example, a network device in a vehicle-to-everything (vehicle-to-everything, V2X) technology may be a road side unit (road side unit, RSU). An example in which the access network device is a base station is used below for description. A plurality of network devices in the communication system may be base stations of a same type, or may be base stations of different types. The base station may communicate with the terminal device, or may communicate with the terminal device via a relay station. The terminal device may communicate with a plurality of base stations using different access technologies.

The core network element is configured to implement at least one of functions such as mobility management, data processing, session management, and strategy and charging. Names of devices that implement core network functions in systems using different access technologies may be different. This is not limited in embodiments of this application. A 5G system is used as an example. The core network element includes an access and mobility management function (access and mobility management function, AMF), a session management function (session management function, SMF), a PCF, a user plane function (user plane function, UPF), or the like.

3. A model may be described as a function (for example, an AI function or a machine learning (machine learning, ML) function), a feature, an algorithm (for example, an AI operator or an AI algorithm), or the like. The AI algorithm (or the AI operator) is a general term of mathematical algorithms constructed based on an artificial intelligence principle, and is also a basis for resolving a specific problem by using AI. Based on different specific methods and/or technologies for implementing artificial intelligence, AI models may include an ML model, a deep learning model, a reinforcement learning model, and the like. The AI models include a supervised AI model and/or an unsupervised AI model. The supervised AI model is obtained by performing training based on training data. The unsupervised AI model is opposite to the supervised AI model. No training needs to be performed on the unsupervised AI model. Optionally, the model may alternatively be described as a function, a feature, an AI model, an AI function, an AI model/function, or the like.

4. A resource includes a time domain resource and/or a frequency domain resource. The time domain resource includes a symbol (symbol), a slot (slot), a mini-slot (mini-slot), a sub-frame (sub-frame), a radio frame (frame), and the like. The frequency domain resource includes a resource element (resource element, RE), a resource block (resource block, RB), a subchannel (subchannel), a resource pool (resource pool), a bandwidth part (bandwidth part, BWP), a carrier (carrier), and the like. For example, a scheduling unit in time domain in new radio (new radio, NR) is, for example, a slot, and a scheduling unit in time domain in long term evolution (long term evolution, LTE) is a sub-frame.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including any combination of singular items (pieces) or plural items (pieces). For example, at least one (piece) of a, b, or c indicates a, b, c, a and b, a and c, b and c, or a, b, and c, where a, b, and c may be singular or plural.

Unless otherwise specified, ordinal numbers such as "first" and "second" in embodiments of this application are used to distinguish between a plurality of objects, and are not intended to limit an order, a time sequence, priorities, or importance of the plurality of objects. For example, "first information" and "second information" in embodiments of this application may be used to represent two pieces of information, but priorities of the two pieces of information are not limited.

The following describes a process of using a model by using an example in which the model is used to determine CSI.

The terminal device may receive a channel state information reference signal (channel state information reference signal, CSI-RS) from the network device. The terminal device inputs the CSI-RS into the model, to obtain CSI output by the model. The CSI output is determined CSI at a future moment. The terminal device sends the CSI to the network device.

The network device may adjust, based on the CSI, a precoding matrix used to send downlink data. The network device may send the downlink data to the terminal device based on an adjusted precoding matrix. The terminal device receives the downlink data, and decodes the downlink data.

The network device may determine a status of receiving the downlink data by the terminal device. The status of receiving the downlink data by the terminal device may be represented by using decoding accuracy of the downlink data. Correspondingly, the network device may manage the model based on the decoding accuracy. For example, if the decoding accuracy is high, the network device may indicate the terminal device to continue using the model, or if the decoding accuracy is low, the network device may indicate the terminal device to stop using the model. However, the decoding accuracy may be affected by a plurality of factors. The network device manages the model of the terminal device based only on the decoding accuracy. As a result, model management accuracy is not high.

In view of this, an embodiment of this application provides a communication method. In the communication method, a first communication apparatus may send first information to a second communication apparatus. The first information indicates a state of a function (namely, a first function) of determining channel information by the first communication apparatus based on any model, and/or a state of a function (namely, a second function) of determining the channel information based on a first model, so that the second communication apparatus can directly determine, based on the state of the first function and/or the state of the second function that are/is indicated by the first communication apparatus, a strategy for managing the model. In this way, accuracy of management model can be improved.

The method in this embodiment of this application is applicable to various communication systems, for example, a 5th generation (5th generation, 5G) communication system (for example, is specifically applicable to scenarios such as enhanced mobile broadband (enhanced mobile broadband, eMBB), ultra-reliable low-latency communication (ultra-reliable low-latency communication, URLLC), and enhanced machine type communication (enhanced machine type communication, eMTC) in the 5G communication system), a beyond 5th generation (beyond 5G) communication system, a 6th generation (6th generation, 6G) communication system, another future evolved system, or various other wireless communication systems.

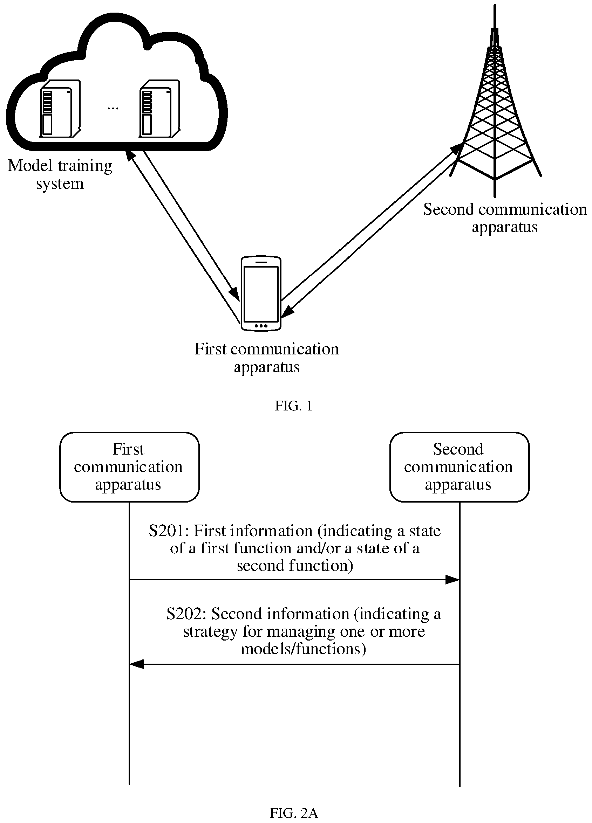

FIG. 1 is a diagram of an application scenario according to an embodiment of this application. Alternatively, FIG. 1 may also be understood as a diagram of a structure of a communication system to which an embodiment of this application is applicable. As shown in FIG. 1, the scenario includes a first communication apparatus and a second communication apparatus. The first communication apparatus and the second communication apparatus may communicate with each other.

For example, the first communication apparatus may be a terminal device, and the second communication apparatus may be a network device. The second communication apparatus is specifically, for example, a radio access network device. In this case, data sent by the first communication apparatus to the second communication apparatus may be considered as uplink data, and data sent by the second communication apparatus to the first communication apparatus may be considered as downlink data. Alternatively, both the first communication apparatus and the second communication apparatus may be terminal devices. For implementations of the terminal device and the network device, refer to the foregoing content.

For example, the first communication apparatus may determine channel information based on a part or all of M models. M is a positive integer. Optionally, the first communication apparatus may send the determined channel information to the second communication apparatus, or the first communication apparatus may process the determined channel information to obtain a processing result, and send the processing result to the second communication apparatus. The channel information is information about a channel between the first communication apparatus and the second communication apparatus. The following describes a manner in which the first communication apparatus obtains the M models.

For example, the M models may be obtained by the first communication apparatus from the second communication apparatus. If the M models include a supervised model, the supervised model may be obtained by the second communication apparatus through training, or may be obtained by the second communication apparatus from an external device.

Alternatively, the M models may be obtained by the first communication apparatus from a model training system shown in FIG. 1. The model training system may be implemented by using one or more computing devices. The computing device is a device having a computing capability, for example, a server or a terminal device. The model training system is specifically implemented, for example, by using a server cluster. In this case, the model training system may also be referred to as a cloud. For example, the model training system may obtain the M models, and send the M models to the first communication apparatus. For example, if the M models include a supervised model, the model training system may perform training to obtain the supervised model in the M models.

Alternatively, a part of the M models may be obtained from the second communication apparatus, and another part of the models may be obtained from the model training system.

Alternatively, the M models may be configured in the first communication apparatus according to a protocol.

The following describes a method provided in embodiments of this application with reference to the accompanying drawings. In the accompanying drawings corresponding to the embodiments of this application, all steps represented by using dashed lines are optional steps. In addition, in embodiments of this application, a first communication apparatus is, for example, the first communication apparatus shown in FIG. 1, a second communication apparatus is, for example, the second communication apparatus shown in FIG. 1, and a model training system is, for example, the model training system shown in FIG. 1.

FIG. 2A is a schematic flowchart of a communication method according to an embodiment of this application. The schematic flowchart includes the following steps.

S201: A first communication apparatus sends first information to a second communication apparatus. Correspondingly, the second communication apparatus receives the first information from the first communication apparatus.

For example, the first information may be carried in uplink control information (uplink control information, UCI). In this case, that the first communication apparatus sends the UCI to the second communication apparatus is equivalent to that the first communication apparatus sends the first information to the second communication apparatus. The first information may be implicitly carried in the UCI, or the first information may be explicitly carried in the UCI. The first information may be carried in a first field of the UCI, and the first field is, for example, a redundant field or a new field of the UCI. For example, the first information is carried in a UCI report (report) of the UCI. Correspondingly, the first field is, for example, a first field in the UCI report. In this way, the UCI is used to carry the first information. This helps reduce interaction between the first communication apparatus and the second communication apparatus.

Alternatively, the first communication apparatus may send the first information to the second communication apparatus on a second resource. The second resource is related to a third resource used to send the UCI. In other words, the first information and the UCI are two pieces of information separately sent by the first communication apparatus to the second communication apparatus, but there is a specific relationship between the resources used to send the two pieces of information. For example, a difference between an index of the second resource and an index of the third resource is a preset value. In this case, optionally, the second communication apparatus may indicate the first communication apparatus to configure the third resource. The first communication apparatus determines the second resource based on the third resource and the relationship between the second resource and the third resource. In this way, the second communication apparatus does not need to separately indicate the second resource to the first communication apparatus, to reduce signaling exchange between the first communication apparatus and the second communication apparatus.

The following describes content of the first information. For example, the first information may indicate a state of a first function and/or a state of a second function.

The state may include valid or invalid. The state may indicate a state at a current moment and/or a state at a future moment. The current moment may be a moment at which the first communication apparatus sends the first information, or a moment at which the first communication apparatus determines the state of the first function or the state of the second function. The future moment is a moment after the current moment.

The first function is a function of determining the channel information based on (or by using) any model. The any model is one of the M models of the first communication apparatus. The second function is a function of determining the channel information based on (or by using) a first model.

The channel information may be, for example, CSI. Correspondingly, the any model and the first model may be models for determining (or predicting) the CSI. The channel information may be, for example, information about compressed CSI, and the information about the compressed CSI may indicate a parameter of the compressed CSI, for example, a compression ratio and/or a compression format. Correspondingly, the any model and the first model may be models for determining (or predicting) the information about the compressed CSI. The channel information may be, for example, compressed CSI (or may be referred to as a compression result of the CSI). Correspondingly, the any model and the first model may be models for compressing the CSI. The channel information is, for example, a beam. Correspondingly, the any model and the first model may be models for determining (or predicting) the beam. The beam may include a transmit beam used by the first communication apparatus to send data, and/or a receive beam used by the first communication apparatus to receive data. The channel information may be, for example, a channel type. Correspondingly, the any model and the first model are used to determine (or predict) the channel type. The channel type may include line of sight (line of sight, LOS) or non-line of sight (non-line of sight, NLOS). The line of sight means that there is no obstacle that affects signal transmission between the first communication apparatus and the second communication apparatus. The non-line of sight means that there is an obstacle that affects signal transmission between the first communication apparatus and the second communication apparatus.

The following describes a possible case of the first information by using an example.

Case 1: The first information may indicate that the state of the first function at the current moment is valid and/or the state of the first function at the future moment is valid. For brevity of description, that the state of the first function at the current moment is valid may be referred to as that the first function is valid at the current moment, and that the state of the first function at the future moment is valid may be referred to as that the first function is valid at the future moment.

That the first function is valid at the current moment may be understood as that the first communication apparatus has a function (or a capability) of determining the channel information based on (or by using) the any model at the current moment. In other words, if the first communication apparatus may determine the channel information based on (or by using) the any model at the current moment, the first function is valid at the current moment. That the first function is valid at the future moment may be understood as that the first communication apparatus has a function (or a capability) of determining the channel information based on (or by using) the any model at the future moment. In other words, if the first communication apparatus may determine the channel information based on (or by using) the any model at the future moment, the first function is valid at the future moment.

Case 2: The first information may indicate that the state of the first function at the current moment is invalid and/or the state of the first function at the future moment is invalid. For brevity of description, that the state of the first function at the current moment is invalid may be referred to as that the first function is invalid at the current moment, and that the state of the first function at the future moment is invalid may be referred to as that the first function is invalid at the future moment.

That the first function is invalid at the current moment may be understood as that the first communication apparatus does not have a function (or a capability) of determining the channel information based on (or by using) the any model at the current moment. In other words, if the first communication apparatus cannot determine the channel information based on the any model at the current moment, the first function is invalid at the current moment. That the first function is invalid at the future moment may be understood as that the first communication apparatus does not have a function (or a capability) of determining the channel information based on (or by using) the any model at the future moment. In other words, if the first communication apparatus cannot determine the channel information based on the any model at the future moment, the first function is invalid at the future moment.

Case 3: The first information may indicate that the state of the second function at the current moment is valid and/or the state of the second function at the future moment is valid. For brevity of description, that the state of the second function at the current moment is valid may be referred to as that the second function is valid at the current moment, and that the state of the second function at the future moment is valid may be referred to as that the second function is valid at the future moment.

That the second function is valid at the current moment may be understood as that the first communication apparatus has a function (or a capability) of determining the channel information based on (or by using) the first model at the current moment. In other words, if the first communication apparatus may determine the channel information based on the first model at the current moment, the second function is valid at the current moment. It should be understood that the second function is valid at the current moment, but the first communication apparatus may not use the first model to determine the channel information at the current moment, or may use the first model to determine the channel information at the current moment. This is not limited in this embodiment of this application.

That the second function is valid at the future moment may be understood as that the first communication apparatus has a function (or a capability) of determining the channel information based on (or by using) the first model at the future moment. In other words, if the first communication apparatus may determine the channel information based on the first model at the future moment, the second function is valid at the future moment.

Case 4: The first information may indicate that the state of the second function at the current moment is invalid and/or the state of the second function at the future moment is invalid. For brevity of description, that the state of the second function at the current moment is invalid may be referred to as that the second function is invalid at the current moment, and that the state of the second function at the future moment is invalid may be referred to as that the second function is invalid at the future moment.

That the second function is invalid at the current moment may be understood as that the first communication apparatus does not have a function (or a capability) of determining the channel information based on (or by using) the first model at the current moment. In other words, if the first communication apparatus cannot determine the channel information based on the first model at the current moment, the second function is invalid at the current moment. That the second function is invalid at the future moment may be understood as that the first communication apparatus does not have a function (or a capability) of determining the channel information based on (or by using) the first model at the future moment. In other words, if the first communication apparatus cannot determine the channel information based on the first model at the future moment, the second function is invalid at the future moment.

Case 5: The first information may indicate that the first function is valid at the current moment and/or the future moment, and that the second function is valid at the current moment and/or the future moment.

Optionally, when the first information indicates that the first function is valid at the future moment, and the second function is valid at the future moment, the future moment corresponding to the first function being valid indicated by the first information may be the same as or different from the future moment corresponding to the second function being valid.

Case 6: The first information may indicate that the first function is valid at the current moment and/or the future moment, and the second function is invalid at the current moment and/or the future moment.

Case 7: The first information may indicate that the first function is invalid at the current moment and/or the future moment, and that the second function is invalid at the current moment and/or the future moment.

Optionally, if the first information is the first information in the case 7, the any model may include the first model.

The foregoing lists possible cases of the first information. The following describes a manner in which the first communication apparatus determines the state of the first function and/or the state of the second function.

In a possible implementation, the first communication apparatus determines the state of the first function based on a running parameter of the first communication apparatus. The running parameter includes at least one of battery power, storage space, a computing capability (which may be referred to as computing power for short), a moving speed, and a channel environment. The channel environment is an environment of a channel between the first communication apparatus and the second communication apparatus. If the states of the first function are different, manners in which the first communication apparatus determines the states of the first function based on the running parameter are also different. Descriptions are separately provided below.
1. The first function is valid at the current moment.

For example, if the condition 1 is met, the first communication apparatus determines that the first function is valid at the current moment. The condition 1 includes at least one of the following conditions shown in A1 to A5.

A1: The battery power of the first communication apparatus is greater than a third threshold.

The third threshold may be configured in the first communication apparatus according to a protocol, or may be configured in the first communication apparatus through negotiation between the first communication apparatus and the second communication apparatus. The third threshold is, for example, 30%.

If the battery power of the first communication apparatus is greater than the third threshold, it indicates that the first communication apparatus has sufficient battery power to run the any model. Therefore, it may be considered that the first function is valid at the current moment.

A2: The storage space that is of the first communication apparatus and that is used to run the any model is greater than a fourth threshold.

For a manner of configuring the fourth threshold, refer to the foregoing content of configuring the third threshold. The fourth threshold is, for example, 5%.

If the storage space that is of the first communication apparatus and that is used to run the any model is greater than the fourth threshold, it indicates that the first communication apparatus has sufficient storage space to run the any model. Therefore, it may be considered that the first function is valid at the current moment.

A3: The computing capability (which may be referred to as the computing power for short) that is of the first communication apparatus and that is used to run a model is greater than a fifth threshold.

For a manner of configuring the fifth threshold, refer to the foregoing content of configuring the third threshold. The fifth threshold is, for example, 3%.

If the computing capability that is of the first communication apparatus and that is used to run the any model is greater than the fifth threshold, it indicates that the first communication apparatus has a sufficient computing capability to run the any model. Therefore, it may be considered that the first function is valid at the current moment.

A4: The moving speed of the first communication apparatus at the current moment belongs to a moving speed range corresponding to the any model. The moving speed range corresponding to the any model includes a moving speed corresponding to the first communication apparatus when the first communication apparatus can determine the channel information by using the any model.

If the moving speed of the first communication apparatus at the current moment belongs to the moving speed range corresponding to the any model, it indicates that the current moving speed of the first communication apparatus meets a requirement of one or more models. Therefore, it may be considered that the first function is valid at the current moment.

A5: The channel environment of the first communication apparatus at the current moment conforms to a channel environment corresponding to the any model. The channel environment corresponding to the any model is a channel environment corresponding to the first communication apparatus when the first communication apparatus can determine the channel information by using the any model.

If the channel environment of the first communication apparatus at the current moment belongs to the channel environment corresponding to the any model, it indicates that the channel environment of the first communication apparatus at the current moment meets a requirement of one or more models. Therefore, it may be considered that the first function is valid at the current moment.

2. The first function is invalid at the current moment.

For example, if the condition 2 is met, the first communication apparatus determines that the first function is invalid at the current moment. The condition 2 includes at least one of the following conditions shown in B1 to B5.

B1: The battery power of the first communication apparatus is less than a sixth threshold.

For a manner of configuring the sixth threshold, refer to the foregoing content of configuring the third threshold. For example, the sixth threshold is 3%. The sixth threshold is less than the third threshold.

If the battery power of the first communication apparatus is less than the sixth threshold, it indicates that the first communication apparatus does not have sufficient battery power to run the any model. Therefore, it may be considered that the first function is invalid at the current moment. This also helps save the battery power of the first communication apparatus.

B2: The storage space that is of the first communication apparatus and that is used to run the any model is less than a seventh threshold.

For a manner of configuring the seventh threshold, refer to the foregoing content of configuring the third threshold. For example, the seventh threshold is 2%. The seventh threshold is less than the fourth threshold.

If the storage space that is of the first communication apparatus and that is used to run the any model is less than the seventh threshold, it indicates that the first communication apparatus does not have sufficient storage space to run the any model. Therefore, it may be considered that the first function is invalid at the current moment. This also helps save the storage space of the first communication apparatus.

B3: The computing capability that is of the first communication apparatus and that is used to run the any model is less than an eighth threshold.

For a manner of configuring the eighth threshold, refer to the foregoing content of configuring the third threshold. For example, the eighth threshold is 0.5%. The eighth threshold is less than the fifth threshold.

If the computing capability that is of the first communication apparatus and that is used to run the any model is less than the eighth threshold, it indicates that the first communication apparatus does not have sufficient computing capability to run the any model. Therefore, it may be considered that the first function is invalid at the current moment. This also helps save the computing capability of the first communication apparatus.

B4: The moving speed of the first communication apparatus at the current moment does not belong to a moving speed range corresponding to the any model. For a meaning of the moving speed range corresponding to the any model, refer to the foregoing descriptions.

If the moving speed of the first communication apparatus at the current moment does not belong to the moving speed range corresponding to the any model, it indicates that the moving speed of the first communication apparatus at the current moment does not meet a requirement of any one of the M models. Therefore, it may be considered that the first function is invalid at the current moment.

B5: The channel environment of the first communication apparatus at the current moment does not conform to a channel environment corresponding to the any model. For a meaning of the channel environment corresponding to the any model, refer to the foregoing descriptions.

If the channel environment of the first communication apparatus at the current moment does not belong to the channel environment corresponding to the any model, it indicates that the channel environment of the first communication apparatus at the current moment does not meet a requirement of any one of the M models. Therefore, it may be considered that the first function is invalid at the current moment.

3. The first function is valid at the future moment.

For example, if the condition 3 is met, the first communication apparatus determines that the first function is valid at the future moment. The condition 3 includes at least one of the following conditions shown in C1 to C5.

C1: The battery power of the first communication apparatus at the future moment is greater than a third threshold. For content of the third threshold, refer to the foregoing descriptions.

For example, the first communication apparatus may determine (or predict) the battery power of the first communication apparatus at the future moment based on a current battery power of the first communication apparatus and a speed at which the first communication apparatus uses the electricity quantity.

C2: The storage space that is of the first communication apparatus and that is used to run the any model at the future moment is greater than a fourth threshold. For content of the fourth threshold, refer to the foregoing descriptions.

For example, the first communication apparatus may determine (or predict) the storage space of the first communication apparatus at the future moment based on current storage space of the first communication apparatus and a speed at which the first communication apparatus uses the storage space.

C3: The computing capability that is of the first communication apparatus and that is used to run a model at the future moment is greater than a fifth threshold. For content of the fifth threshold, refer to the foregoing descriptions.

For example, the first communication apparatus may determine (or predict) the computing capability of the first communication apparatus at the future moment based on a current computing capability of the first communication apparatus and a speed at which the first communication apparatus uses the computing capability.

C4: The moving speed of the first communication apparatus at the future moment belongs to a moving speed range corresponding to the any model. For a meaning of the moving speed range corresponding to the any model, refer to the foregoing descriptions.

If the moving speed of the first communication apparatus at the future moment belongs to the moving speed range corresponding to the any model, it indicates that the moving speed of the first communication apparatus at the current moment meets a requirement of a part or all of the M models. Therefore, it may be considered that the first function is valid at the future moment.

The first communication apparatus may determine the moving speed of the first communication apparatus at the future moment based on the moving speed of the first communication apparatus at the current moment and an acceleration.

C5: The channel environment of the first communication apparatus at the future moment conforms to a channel environment corresponding to the any model. For a meaning of the channel environment corresponding to the any model, refer to the foregoing descriptions.

If the channel environment of the first communication apparatus at the future moment belongs to the channel environment corresponding to the any model, it indicates that the channel environment of the first communication apparatus at the current moment meets a requirement of a part or all of the M models. Therefore, it may be considered that the first function is valid at the future moment.

The first communication apparatus may estimate the channel environment of the first communication apparatus at the future moment based on the channel environment of the first communication apparatus at the current moment.

4. The first function is invalid at the future moment.

For example, if the condition 4 is met, the first communication apparatus determines that the first function is invalid at the future moment. The condition 4 includes at least one of the following conditions shown in D1 to D5.

D1: The battery power of the first communication apparatus at the future moment is less than a sixth threshold. For content of the sixth threshold, refer to the foregoing descriptions.

For a manner in which the first communication apparatus determines the battery power at the future moment, refer to the foregoing content.

D2: The storage space that is of the first communication apparatus and that is used to run the any model at the future moment is less than a seventh threshold. For content of the seventh threshold, refer to the foregoing descriptions.

For a manner in which the first communication apparatus determines the storage space at the future moment, refer to the foregoing content.

D3: The computing capability that is of the first communication apparatus and that is used to run the any model at the future moment is less than an eighth threshold. For content of the eighth threshold, refer to the foregoing descriptions.

For a manner in which the first communication apparatus determines the computing capability at the future moment, refer to the foregoing content.

D4: The moving speed of the first communication apparatus at the future moment does not belong to a moving speed range corresponding to the any model. For a meaning of the moving speed range corresponding to the any model, refer to the foregoing descriptions.

If the moving speed of the first communication apparatus at the future moment does not belong to the moving speed range corresponding to the any model, it indicates that the moving speed of the first communication apparatus at the current moment does not meet a requirement of any one of the M models. Therefore, it may be considered that the first function is invalid at the future moment.

For a manner in which the first communication apparatus determines the moving speed at the future moment, refer to the foregoing content.

D5: The channel environment of the first communication apparatus at the future moment does not conform to a channel environment corresponding to the any model. For a meaning of the channel environment corresponding to the any model, refer to the foregoing descriptions.

If the channel environment of the first communication apparatus at the future moment does not belong to the channel environment corresponding to the any model, it indicates that the channel environment of the first communication apparatus at the current moment does not meet a requirement of any one of the M models. Therefore, it may be considered that the first function is invalid at the future moment.

For a manner in which the first communication apparatus determines the channel environment at the future moment, refer to the foregoing content.

The foregoing describes the manners in which the first communication apparatus determines the states of the first function. However, there are actually a plurality of manners of determining the state of the first function. This is not specifically limited in this embodiment of this application.

In a possible implementation, the first communication apparatus determines the state of the second function based on the running parameter of the first communication apparatus and/or a confidence level of the channel information determined by the first communication apparatus by using the first model. For brevity of description, the confidence level of the channel information determined by the first communication apparatus by using the first model is referred to as a confidence level of the first model for short below.

Optionally, the first communication apparatus may determine the confidence level of the first model based on an error between the channel information determined based on the first model and actual channel information. Certainly, there are a plurality of manners in which the first communication apparatus determines the confidence level of the first model. This is not specifically limited in this embodiment of this application.

If the states of the second function are different, manners in which the first communication apparatus determines the states of the second function based on the running parameter and/or the confidence level of the first model are also different. Descriptions are separately provided below.

5. The second function is valid at the current moment.

For example, if the condition 5 is met, the first communication apparatus determines that the second function is valid at the current moment. The condition 5 includes the following condition shown in E1 and/or condition shown in E2.

E1: The first communication apparatus supports running of the first model.

If the battery power of the first communication apparatus is greater than a ninth threshold, the storage space that is of the first communication apparatus and that is used to run the first model is greater than a tenth threshold, the computing capability that is of the first communication apparatus and that is used to run the first model is greater than an eleventh threshold, the moving speed of the first communication apparatus belongs to a moving speed range corresponding to the first model, the channel environment of the first communication apparatus conforms to a channel environment corresponding to the first model, and the confidence level of the first model is greater than or equal to a second threshold, it may be considered that the first communication apparatus supports running of the first model. The moving speed range corresponding to the first model includes a moving speed corresponding to the first communication apparatus when the first communication apparatus can determine the channel information by using the first model. The channel environment corresponding to the first model is a channel environment corresponding to the first communication apparatus when the first communication apparatus can determine the channel information by using the first model.

For manner of configuring the ninth threshold, the tenth threshold, and the eleventh threshold by the first communication apparatus, refer to the foregoing content of configuring the third threshold by the first communication apparatus.

E2: The confidence level of the channel information determined by the first communication apparatus based on the first model is greater than a second threshold.

For a manner of configuring the second threshold by the first communication apparatus, refer to the foregoing content of configuring the third threshold.

6. The second function is invalid at the current moment.

For example, if the condition 6 is met, the first communication apparatus determines that the second function is invalid at the current moment. The condition 6 includes the following condition shown in F1 and/or condition shown in F2.

F1: The first communication apparatus does not support running of the first model.

If at least one of the following: the battery power of the first communication apparatus is less than a twelfth threshold, the storage space that is of the first communication apparatus and that is used to run the first model is less than a thirteenth threshold, the computing capability that is of the first communication apparatus and that is used to run the first model is less than a fourteenth threshold, the moving speed of the first communication apparatus does not belong to a moving speed range corresponding to the first model, the channel environment of the first communication apparatus does not conform to a channel environment corresponding to the first model, and the confidence level of the first model is less than a second threshold, is met, it may be considered that the first communication apparatus does not support running of the first model. The moving speed range includes a moving speed that is of the first communication apparatus and to which the first model is applicable.

For manner of configuring the twelfth threshold, the thirteenth threshold, and the fourteenth threshold by the first communication apparatus, refer to the foregoing content of configuring the third threshold by the first communication apparatus.

Optionally, the twelfth threshold is less than or equal to the ninth threshold, the thirteenth threshold is less than or equal to the tenth threshold, and the fourteenth threshold is less than or equal to the eleventh threshold.

F2: The confidence level of the channel information determined by the first communication apparatus based on the first model is less than a second threshold.

The second threshold is less than or equal to a first threshold. For a manner of configuring the second threshold by the first communication apparatus, refer to the foregoing content of configuring the third threshold by the first communication apparatus.

7. The second function is valid at the future moment.

For example, if the condition 7 is met, the first communication apparatus determines that the second function is valid at the future moment. The condition 7 includes at least one of the following conditions shown in G1 to G5.

G1: The battery power of the first communication apparatus at the future moment is greater than a ninth threshold.

For content of the ninth threshold and a manner in which the first communication apparatus determines the battery power at the future moment, refer to the foregoing descriptions.

G2: The storage space that is of the first communication apparatus and that is used to run the first model at the future moment is greater than a tenth threshold.

For content of the tenth threshold and a manner in which the first communication apparatus determines the storage space at the future moment, refer to the foregoing descriptions.

G3: The computing capability that is of the first communication apparatus and that is used to run the first model at the future moment is greater than an eleventh threshold.

For content of the eleventh threshold and a manner in which the first communication apparatus determines the computing capability at the future moment, refer to the foregoing descriptions.

G4: The moving speed of the first communication apparatus at the future moment belongs to a moving speed range corresponding to the first model. For a meaning of the moving speed range corresponding to the first model and a manner of determining the moving speed of the first communication apparatus at the future moment, refer to the foregoing descriptions.

G5: The channel environment of the first communication apparatus at the future moment belongs to a channel environment corresponding to the first model. For a meaning of the channel environment corresponding to the first model and a manner of determining the channel environment of the first communication apparatus at the future moment, refer to the foregoing descriptions.

8. The second function is invalid at the future moment.

For example, if the condition 8 is met, the first communication apparatus determines that the second function is invalid at the future moment. The condition 8 includes at least one of the following conditions shown in H1 to H5.

H1: The battery power of the first communication apparatus at the future moment is less than a twelfth threshold.

For content of the twelfth threshold and a manner in which the first communication apparatus determines the battery power at the future moment, refer to the foregoing descriptions.

H2: The storage space that is of the first communication apparatus and that is used to run the first model at the future moment is less than a thirteenth threshold.

For content of the thirteenth threshold and a manner in which the first communication apparatus determines the storage space at the future moment, refer to the foregoing descriptions.

H3: The computing capability that is of the first communication apparatus and that is used to run the first model at the future moment is less than a fourteenth threshold.

For content of the fourteenth threshold and a manner in which the first communication apparatus determines the computing capability at the future moment, refer to the foregoing descriptions.

H4: The moving speed of the first communication apparatus at the future moment does not belong to a moving speed range corresponding to the first model.

For both a meaning of the moving speed range corresponding to the first model and a manner in which the first communication apparatus determines the moving speed at the future moment, refer to the foregoing descriptions.

H5: The channel environment of the first communication apparatus at the future moment does not belong to a channel environment corresponding to the first model. For a meaning of the channel environment corresponding to the first model and a manner of determining the channel environment of the first communication apparatus at the future moment, refer to the foregoing descriptions.

The foregoing describes examples of the manners in which the first communication apparatus determines the state of the first function and the state of the second function. Actually, there are a plurality of manners in which the first communication apparatus determines the state of the first function and the state of the second function. This is not specifically limited in this embodiment of this application.

In a possible implementation, the first information further indicates the first communication apparatus to determine the confidence level of the channel information based on the first model. The first information may further specifically indicate that the confidence level of the channel information determined based on the first model is greater than the first threshold, or indicate that the confidence level of the channel information determined based on the first model is less than or equal to the first threshold. The first threshold may be greater than or equal to the second threshold.

The following describes the first information by using an example with reference to an example of the first information shown in Table 1. In Table 1, an example in which the first information occupies 3 bits is used for description.

**Table 1**

| Value of the first information | Content of the first information |
|---|---|
| 000 | The second function is valid at the current moment and the future moment, and the confidence level is greater than the first threshold. |
| 001 | The second function is valid at the current moment and the future moment, and the confidence level is less than or equal to the first threshold. |
| 010 | The first function is invalid at the future moment, and the confidence level is greater than the first threshold. |
| 011 | The first function is invalid at the future moment, and the confidence level is less than or equal to the first threshold. |
| 100 | The first function is valid at the current moment, the second function is invalid at the future moment, and the confidence level is greater than the first threshold. |
| 101 | The first function is valid at the current moment, the second function is invalid at the current moment, and the confidence level is less than or equal to the first threshold. |
| 110 | The first function is invalid at the current moment. |
| 111 | The first function is valid at the current moment, and the second function is invalid at the current moment. |

Refer to Table 1. The first communication apparatus sends the first information to the second communication apparatus, and the value of the first information is 111. In this case, after receiving the first information, the second communication apparatus may determine that the first function of the second communication apparatus is valid at the current moment and the second function is invalid at the current moment.

Table 1 is merely an example of the first information, and does not limit the value, the content, and the like of the first information.

In a possible implementation, when the state of the first function is updated from invalid to valid, the first information may indicate that the first function is valid at the current moment, and the first communication apparatus may further send third information to the second communication apparatus. Correspondingly, the second communication apparatus receives the third information from the first communication apparatus. Optionally, the third information may be carried in UE auxiliary information (UE assistance information, UAI).

For example, the third information indicates an identifier of at least one model that is applicable to the first communication apparatus for determining the channel information. The at least one model may be understood as a model that may be used by the first communication apparatus to determine the channel information in the M models. The identifier of the at least one model may include an identifier of each of the at least one model. In this implementation, the second function may be valid or invalid at the current moment. This is not limited in this embodiment of this application.

The first communication apparatus may determine the at least one model in the M models. The first communication apparatus may determine the at least one model in any one of the following manners 1 to 3.

Manner 1: The first communication apparatus may determine the at least one model in the M models based on the moving speed of the first communication apparatus at the current moment. The at least one model determined by the first communication apparatus may vary at different moments. In this case, a moving speed range corresponding to the at least one model includes the moving speed of the first communication apparatus at the current moment.

Manner 2: The first communication apparatus may determine the at least one model in the M models based on the channel environment of the first communication apparatus at the current moment. In this case, a channel environment corresponding to the at least one model includes the channel environment of the first communication apparatus at the current moment.

Manner 3: The first communication apparatus may determine the at least one model based on the moving speed and the channel environment at the current moment. In this case, a moving speed range corresponding to the at least one model includes the moving speed of the first communication apparatus at the current moment.

In addition, a channel environment corresponding to the at least one model includes the channel environment of the first communication apparatus at the current moment.

Alternatively, the third information indicates model-related configuration information.

The model-related configuration information indicates a model-related configuration, and may be used to determine the at least one model. The model-related configuration implements a configuration related to an AI function. The model-related configuration may enable or use a function supporting AI. Optionally, the model-related configuration may be a configuration that can be supported based on a UE capability. In this case, the first communication apparatus reports the model-related configuration information instead of directly indicating the at least one model. The model-related configuration information is related to the at least one model. Therefore, the second communication apparatus may determine the at least one model based on the model-related configuration information.

For example, if the first communication apparatus reports a function (which may also be referred to as a CSI compression function) supporting compression of CSI with a rank (rank) of 4, the first communication apparatus may report capability information to the second communication apparatus. The capability information indicates that the first communication apparatus supports a CSI-RS configuration with a rank of 4 and a corresponding CSI feedback configuration.

For another example, if the first communication apparatus reports a function supporting prediction of AI-CSI within future 10 ms, the first communication apparatus may report capability information to the second communication apparatus. The capability information may support a CSI-RS pattern P configuration and a corresponding CSI feedback configuration. CSI-RS pattern P is a CSI-RS pilot pattern used for CSI prediction. Optionally, the CSI-RS pilot pattern used for CSI prediction is more densely distributed in time domain than a CSI-RS pilot pattern used for non-CSI prediction.

When the third information indicates the model-related configuration information, the first communication apparatus does not need to determine the at least one model.

Optionally, if determining that the state of the first function is updated from invalid to valid, the second communication apparatus may send a first request to the first communication apparatus. Correspondingly, the first communication apparatus receives the first request from the second communication apparatus. The first request is used to request a model applicable to the first communication apparatus for determining the channel information. After receiving the first request, the first communication apparatus sends the third information to the second communication apparatus.

In a possible implementation, the first communication apparatus may further send capability information of the first communication apparatus to the second communication apparatus. The capability information may include at least one of the following indications: The first communication apparatus has a capability of updating the first model, and the first communication apparatus has a capability of retraining a model; the first communication apparatus does not have a capability of updating the first model, and the first communication apparatus has a capability of retraining a model; the first communication apparatus has a capability of updating the first model, and the first communication apparatus does not have a capability of retraining a model; or the first communication apparatus does not have a capability of updating the first model, and the first communication apparatus does not have a capability of retraining a model.

Optionally, the capability information may be carried in the first information, or the first communication apparatus may separately send the capability information and the first information to the second communication apparatus.

S202: The second communication apparatus sends second information to the first communication apparatus. Correspondingly, the first communication apparatus receives the second information from the second communication apparatus.

For example, the second information indicates a strategy used to manage one or more models. The one or more models may include the any one model and/or the first model in the foregoing descriptions. The one or more models may belong to the M models. Alternatively, a part of the one or more models belong to the M models, and another part of the one or more models do not belong to the M models.

After receiving the first information, the second communication apparatus may determine the strategy based on the state of the first function and/or the state of the second function. In other words, the strategy is related to the state of the first function and/or the state of the second function. Correspondingly, the second communication apparatus may send the second information to the first communication apparatus. The second information indicates the strategy. The strategy may indicate at least one piece of content shown in P1 to P11. Correspondingly, the second information may also indicate the at least one piece of the content shown in P1 to P11.

P1: Deactivate (inactive) the first model.

Deactivating the first model may be understood as that the first model was in an active state before, and the first communication apparatus stops using the first model.

P2: Determine the channel information by continuing using the first model.

Determining the channel information by continuing using the first model may also be described as keeping the active state of the first model.

P3: Update the first model.

The updating the first model includes updating a model parameter of the first model, or updating a model structure and a model parameter of the first model. The updating a model parameter of the first model is, for example, retraining the first model based on training data. The updating a model structure and a model parameter of the first model is, for example, changing the model structure of the first model and retraining the first model based on the training data.

P4: Enhance a first signal.

The first signal is used to determine an input of the first model. For example, if the first model is used to determine CSI or a beam, the first signal may be a CSI-RS. For another example, if the first model is used to determine a channel type, the first signal may be a PRS. For another example, if the first model is used to determine information about compressed CSI, the first signal may be the CSI. For another example, if the first model is used to compress CSI, the first signal may be the CSI. For example, the first signal may be directly used as the input of the first model; or the first signal may be preprocessed, and a preprocessed first signal is used as the input of the first model; or the first signal may be measured, to obtain a measurement result, and the measurement result is used as the input of the first model.

The enhancing a first signal may include at least one of enhancing density of the first signal in time domain, enhancing density of the first signal in frequency domain, and enhancing power for sending the first signal. The density of the first signal in time domain is enhanced. For example, the second communication apparatus may indicate a first signal in a new pattern (pattern) (for example, a first pattern) to the first communication apparatus. The first signal in the first pattern has higher distribution density in time domain than the first signal in an old pattern (for example, a second pattern). The density of the first signal in frequency domain is enhanced. For example, the second communication apparatus may indicate a first signal in a third pattern to the first communication apparatus. The first signal in the third pattern has higher distribution density in frequency domain than the first signal in the second pattern.

P5: Retrain a model used to determine the channel information.

The retrained model used to determine the channel information does not belong to the M models.

P6: Switch the model used by the first communication apparatus to determine the channel information from the first model to a second model.

The second model may belong to the M models, or may not belong to the M models. The second model belongs to the one or more models. The second model may be different from the first model, or may be the same as the first model.

P7: Stop triggering a procedure related to the first function.

The stopping triggering a procedure related to the first function may be understood as not starting the procedure related to the first function, or stopping the procedure related to the first function.

The procedure related to the first function includes a procedure of switching the first model, a procedure of updating the first model, a procedure of retraining a model used to determine the channel information, and a procedure of enhancing the first signal.

The switching the first model is, for example, switching the model used to determine the channel information from the first model to another model. The another model is a model other than the first model.

P8: Stop triggering a procedure related to the second function.

The procedure related to the second function includes a procedure of updating the first model and a procedure of enhancing the first signal.

In a possible implementation, in addition to indicating the strategy, the second information may further indicate the following content shown in P9 and/or P10.

P9: A first resource is invalid.

The first resource is a resource used by the first communication apparatus to send the channel information determined based on the any model. That a first resource is invalid may be understood as that the first communication apparatus does not use the first resource to send the channel information determined based on the any model. To be specific, the first resource is originally configured for the first communication apparatus to send the channel information determined based on the any model, but the first communication apparatus no longer subsequently uses the first resource to send the channel information determined based on the any model.

Optionally, when the any model includes the first model, the first resource may be a resource used by the first communication apparatus to send the channel information determined based on the first model.

In this implementation, when the first function is invalid at the current moment or is invalid at the future moment, or the second function is invalid at the current moment or is invalid at the future moment, the second communication apparatus determines that the first communication apparatus cannot determine the channel information based on the any model and does not need to send the determined channel information. Therefore, the second communication apparatus may indicate that the first resource is invalid, so that the first resource can be used for another purpose in a timely manner. The first resource is properly used.

For example, still refer to Table 1. If the value of the first information is 110, and the second communication apparatus determines that the first function is invalid at the current moment, the second communication apparatus may determine that the second information indicates that the first resource is invalid. Alternatively, if the value of the first information is 111, and the second communication apparatus determines that the first function is valid at the current moment and the second function is invalid at the current moment, the second communication apparatus may determine that the second information indicates that the first resource is invalid.

Optionally, when both the first information and the channel information determined based on the any model are carried in third UCI, the first resource may be the same as the foregoing third resource.

P10: Another resource is invalid.

The another resource is another resource related to the first function other than the first resource. The another resource is, for example, a resource used by the first communication apparatus to receive the first signal.

In this implementation, the second communication apparatus may indicate that the another resource is invalid, so that the another resource can be used for another purpose in a timely manner. The another resource is properly used. In this way, the second communication apparatus can use the another resource for the another purpose, and resource utilization can also be improved.

P11: Update the UCI sent by the first communication apparatus from first UCI to second UCI.

The first UCI indicates the channel information determined based on the any model. Specifically, for example, a UCI report of the first UCI indicates the channel information determined based on the any model. The second UCI does not indicate the channel information determined based on the any model.

Optionally, the first UCI and the second UCI may each include a second field, the second field is used to carry the channel information determined based on the any model. The second field of the first UCI is not empty, and the second field of the second UCI is empty. Alternatively, the first UCI includes the second field, and the second UCI does not include the second field.

Optionally, when the any model includes the first model, the first UCI may indicate the channel information determined based on the first model, and the second UCI may not indicate the channel information determined based on the first model.

Optionally, if both the first information and the channel information determined based on the any model are carried in the third UCI, the third UCI may be the same as the first UCI.

In this implementation, if the channel information determined based on the any model is carried in the first UCI, and the first function is invalid at the current moment or at the future moment, the second communication apparatus determines that the first communication apparatus cannot determine the channel information based on the any model and does not need to send the determined channel information. Therefore, the second communication apparatus may indicate the first communication apparatus to send the second UCI that does not need to indicate the channel information determined based on the any model, so that the first communication apparatus can successfully send the UCI.

The second information may explicitly indicate the at least one piece of the content shown in P1 to P11. For example, the second information may include at least one bit, and one of the at least one bit indicates the at least one piece of the content shown in P1 to P11.

Alternatively, the second information may implicitly indicate the at least one piece of the content shown in P1 to P11. For example, the second information may include one bit, and the bit indicates an identifier of the second UCI, and further actually implicitly indicates the content shown in P1. A specific manner in which the second information indicates the at least one piece of the content shown in P1 to P11 is not limited in this embodiment of this application.

If content indicated by the first information is different, content of the second information may also be different. The following separately describes the content.

S1: The first information indicates information shown in the foregoing case 1. To be specific, the first information indicates that the first function is valid at the current moment, and/or is valid at the future moment.

In this case, the first communication apparatus determines that the second information indicates the content shown in P2 (that is, determine the channel information by continuing using the first model).

S2: The first information indicates information shown in the foregoing case 2. To be specific, the first information indicates that the first function is invalid at the current moment, and/or the first function is invalid at the future moment.

In this case, the second communication apparatus may determine that the first communication apparatus cannot determine the channel information based on the any model at the current moment or at the future moment. Therefore, the second communication apparatus may determine that the second information indicates the content shown in P1 (that is, deactivate the first model) and/or the content shown in P7 (that is, stop triggering a procedure related to the first function). Optionally, if duration between the future moment and the current moment is less than fifth duration, in other words, a time distance between the future moment and the current moment is short, the future moment may be described as "to be". The fifth duration may be determined through negotiation between the first communication apparatus and the second communication apparatus, or may be preconfigured or predefined in the first communication apparatus and the second communication apparatus.

In a possible implementation, the second information may further indicate at least one of P9 (that is, a first resource is invalid), P10 (that is, another resource is invalid), and P11 (that is, update the UCI sent by the first communication apparatus from first UCI to second UCI).

S3: The first information indicates information shown in the foregoing case 3. To be specific, the first information indicates that the states of the second function at the current moment and the future moment are valid.

In this case, the second communication apparatus may determine that the first communication apparatus may continue using the first model. Correspondingly, the second communication apparatus determines that the second information indicates at least one of the content shown in P2 (that is, the first communication apparatus determines the channel information by continuing using the first model), the content shown in P3 (that is, update the first model), and the content shown in P4 (that is, enhance a first signal).

Alternatively, the second communication apparatus determines that the second information indicates the content shown in P1 (that is, deactivate the first model) and/or P6 (that is, switch the model used by the first communication apparatus to determine the channel information from the first model to a second model).

S4: The first information indicates information shown in the foregoing case 4. To be specific, the first information indicates that the second function is invalid at the current moment, and/or is invalid at the future moment.

In this case, the second communication apparatus may determine that the first communication apparatus cannot determine the channel information based on the first model at the current moment or at the future moment. Therefore, the second communication apparatus may determine that the second information indicates at least one of the content shown in P1, the content shown in P5 (that is, retrain a model used to determine the channel information), the content shown in P6 (that is, switch the model used by the first communication apparatus to determine the channel information from the first model to a second model), and the content shown in P8 (that is, stop triggering a procedure related to the second function).

In a possible implementation, the second information may further indicate at least one of the content shown in P9 (that is, a first resource is invalid), the content shown in P10 (that is, another resource is invalid), and the content shown in P11 (that is, update the UCI sent by the first communication apparatus from first UCI to second UCI).

S5: The first information indicates information shown in the foregoing case 5. To be specific, the first information indicates that the first function is valid at the current moment and/or the future moment, and the second function is valid at the current moment and/or the future moment.

In this case, the second information indicates at least one of the content shown in P2 (that is, the first communication apparatus determines the channel information by continuing using the first model), the content shown in P3 (that is, update the first model), and the content shown in P4 (that is, enhance a first signal).

Alternatively, the second information may indicate the content shown in P1 (that is, the first communication apparatus deactivates the first model) and/or P6 (that is, switch the model used by the first communication apparatus to determine the channel information from the first model to a second model).

S6: The first information indicates information shown in the foregoing case 6. To be specific, the first information indicates that the first function is valid at the current moment and/or the future moment, and the second function is invalid at the current moment and/or the future moment.

In this case, the second communication apparatus may determine that the first communication apparatus cannot determine the channel information based on the first model at the current moment or at the future moment. Therefore, the second communication apparatus may determine that the second information indicates at least one of the content shown in P1, the content shown in P5 (that is, retrain a model used to determine the channel information), the content shown in P6 (that is, switch the model used by the first communication apparatus to determine the channel information from the first model to a second model), and the content shown in P8 (that is, stop triggering a procedure related to the second function).

In a possible implementation, the second information may further indicate at least one of the content shown in P9 (that is, a first resource is invalid), the content shown in P10 (that is, another resource is wireless), and the content shown in P11 (that is, update the UCI sent by the first communication apparatus from first UCI to second UCI).

S7: The first information indicates information shown in the foregoing case 7. To be specific, the first information indicates that the first function is invalid at the current moment and/or the future moment, and the second function is invalid at the current moment and/or the future moment.

In this case, the second communication apparatus may determine that the first communication apparatus cannot determine the channel information based on the any model at the current moment or is about to be unable to determine the channel information based on the any model. Therefore, the second communication apparatus may determine that the second information indicates the content shown in P1 (that is, deactivate the first model) and/or the content shown in P7 (that is, stop triggering a procedure related to the first function).

In a possible implementation, the second information may further indicate at least one of P9 (that is, a first resource is invalid), P10 (that is, another resource is invalid), and P11 (that is, update the UCI sent by the first communication apparatus from first UCI to second UCI).

In a possible implementation, if the second communication apparatus receives the capability information from the first communication apparatus, the second communication apparatus may alternatively determine the second information based on the capability information of the first communication apparatus, the state of the first function and/or the state of the second function, and the first information.

For example, when the second communication apparatus determines the second information in any one of the foregoing manners S1 to S7, and the second communication apparatus determines, based on the capability information, that the first communication apparatus does not have the capability of updating the first model, the second communication apparatus determines that the strategy indicated by the second information does not include updating the first model. When the second communication apparatus determines, based on the capability information, that the first communication apparatus does not have the capability of retraining the first model, the second communication apparatus determines that the strategy indicated by the second information does not include retraining the first model.

In a possible implementation, when the first information further indicates the confidence level of the first model, the second communication apparatus may alternatively determine, based on the state of the first function and/or the state of the second function and the confidence level of the first model, the strategy for managing the one or more models. In other words, the strategy is related to the state of the first function and/or the state of the second function and the confidence level of the first model. The following describes, by using an example, content of the second information when the first information further indicates the confidence level of the first model.

R1: The first information indicates the information shown in the foregoing case 1 and the confidence level of the first model.

In this case, for the content of the second information, refer to the content shown in S1.

R2: The first information indicates the information shown in the foregoing case 2 and the confidence level of the first model.

In this case, for the content of the second information, refer to the content shown in S2.

R3: When the first information indicates the information shown in the foregoing case 3 and the confidence level of the first model, the content of the second information may be related to the confidence level of the first model. Descriptions are separately provided below.

If the confidence level of the first model is greater than the first threshold, it indicates that the first communication apparatus may continue using the first model, and performance of the first model is good. Therefore, the second information indicates at least one of the content shown in P2 (that is, the first communication apparatus determines the channel information by continuing using the first model), the content shown in P3 (that is, update the first model), and the content shown in P4 (that is, enhance a first signal). Certainly, in this case, the second information may further indicate the content shown in P1 (that is, deactivate the first model) and/or the content shown in P6 (that is, switch the model used by the first communication apparatus to determine the channel information from the first model to a second model).

If the confidence level of the channel information determined based on the first model is less than or equal to the first threshold, it indicates that the first communication apparatus may continue using the first model, but the performance of the first model is poor. Therefore, the second information indicates the content shown in P1 (that is, deactivate the first model) and/or the content shown in P6 (that is, switch the model used by the first communication apparatus to determine the channel information from the first model to a second model).

R4: The first information indicates the information shown in the foregoing case 4 and the confidence level of the first model.

In this case, for the content of the second information, refer to the content shown in S4.

R5: The first information indicates the information shown in the foregoing case 5 and the confidence level of the first model.

In this case, for the content of the second information, refer to the content shown in S5.

R6: The first information indicates the information shown in the foregoing case 6 and the confidence level of the first model.

In this case, for the content of the second information, refer to the content shown in S6.

R7: The first information indicates the information shown in the foregoing case 7 and the confidence level of the first model.

In this case, for the content of the second information, refer to the content in S7.

In a possible implementation, when the second communication apparatus receives the capability information of the first communication apparatus, the second communication apparatus may alternatively determine the strategy based on the capability information of the first communication apparatus, the state of the first function and/or the state of the second function, and the confidence level of the first model.

For example, when the second communication apparatus determines the second information in any one of the foregoing manners R1 to R7, and the second communication apparatus determines, based on the capability information, that the first communication apparatus does not have the capability of updating the first model, the second communication apparatus determines that the strategy indicated by the second information does not include updating the first model. When the second communication apparatus determines, based on the capability information, that the first communication apparatus does not have the capability of retraining the first model, the second communication apparatus determines that the strategy indicated by the second information does not include retraining the first model.

In a possible implementation, when the second communication apparatus receives the third information, the second communication apparatus may alternatively determine the strategy based on the at least one model and the state of the first function.

For example, the second communication apparatus determines that the first communication apparatus did not have the first function before and has the first function at the current moment. Correspondingly, the second communication apparatus may determine, for the first communication apparatus in the at least one model, the model used to determine the channel information. In this implementation, an example in which the determined model used to determine the channel information is a third model is used for description. In this case, the strategy indicates the first communication apparatus to determine the channel information by using the third model. The third model may be the same as or different from the first model, and the third model may be the same as or different from the second model.

Optionally, in this case, the second information may further indicate a resource used by the first communication apparatus to send the channel information determined based on the third model. For brevity of description, in this embodiment of this application, the resource used by the first communication apparatus to send the channel information determined based on the third model is referred to as a fourth resource.

In this implementation, the second communication apparatus may determine, for the first communication apparatus in a timely manner, the model used to determine the channel information, so that the first communication apparatus can use the channel information determined based on the third model in a timely manner. In addition, the fourth resource may be further indicated to the first communication apparatus in a timely manner, so that the first communication apparatus may send, in a timely manner, the channel information determined based on the third model.

In a possible implementation, before determining that the strategy indicates to deactivate the first model, switch the first model to the second model, or update the first model, the second communication apparatus may further determine that a second condition is met. The second condition includes at least one of W1 to W4.

W1: A cumulative quantity of times that the confidence level of the channel information determined by the first communication apparatus by using the first model is less than or equal to the first threshold is greater than or equal to a first quantity of times. The cumulative quantity of times may be a cumulative quantity of non-consecutive times, or may be a cumulative quantity of consecutive times.

For example, the second communication apparatus may include a first counter, and the first counter may also be referred to as a first deactivation counter. The first counter may be preconfigured in the second communication apparatus according to the protocol, or may be configured in the second communication apparatus through negotiation between the first communication apparatus and the second communication apparatus.

The second communication apparatus determines, through the first counter, the cumulative quantity of times that the confidence level of the channel information determined based on the first model is less than or equal to the first threshold. For brevity of description, in this embodiment of this application, the cumulative quantity of times that the confidence level of the channel information determined by the first communication apparatus by using the first model is less than or equal to the first threshold is referred to as a first cumulative quantity of times.

The second communication apparatus may determine whether the first cumulative quantity of times is greater than or equal to the first quantity of times. If the first cumulative quantity of times is greater than or equal to the first quantity of times, it may be determined to deactivate the first model, switch the first model to the second model, or update the first model. If the first cumulative quantity of times is less than the first quantity of times, it may be determined not to perform deactivation processing on the first model, switch the first model, or update the first model. The first quantity of times may be preconfigured in the second communication apparatus according to the protocol, or may be configured in the second communication apparatus through negotiation between the first communication apparatus and the second communication apparatus.

An example in which the first quantity of times is N_max, a current counting result of the first counter is n, and the first cumulative quantity of times represents a cumulative quantity of consecutive times is used below for description.

If the confidence level that is of the first model, that is fed back by the first communication apparatus, and that is received by the second communication apparatus for N_max consecutive times is less than or equal to the first threshold, that is, n=N_max, it is determined to deactivate the first model. If the count n<N_max is met, and n is an accumulated quantity of times that the confidence that is received by the second communications apparatus and that is of the channel information determined by the first communication apparatus by using the first model is greater than the first threshold or the confidence level of the channel information determined by the first communication apparatus by using the first model is greater than the first threshold for N_min consecutive times, deactivation processing is not performed on the first model, and the first counter is reset immediately, that is, n is set to 0.

W2: A cumulative quantity of times that the confidence level of the channel information determined by the first communication apparatus by using the first model is greater than the first threshold is less than or equal to a second quantity of times. For a meaning of the cumulative quantity of times, refer to the foregoing descriptions.

For example, the second communication apparatus may include a second counter, and determine, through the second counter, the cumulative quantity of times that the confidence level of the channel information determined based on the first model is greater than the first threshold. For brevity of description, in this embodiment of this application, the cumulative quantity of times that the confidence level of the channel information determined based on the first model is greater than the first threshold is referred to as a second cumulative quantity of times. For a manner of setting the second counter by the second communication apparatus, refer to the foregoing content of setting the first counter by the second communication apparatus.

The second communication apparatus may determine whether the second cumulative quantity of times is less than or equal to the second quantity of times. If the second cumulative quantity of times is less than or equal to the second quantity of times, it may be determined to deactivate the first model, switch the first model to the second model, or update the first model. If the second cumulative quantity of times is greater than the second quantity of times, it may be determined not to perform deactivation processing on the first model, switch the first model, or update the first model. For a manner of obtaining the second quantity of times by the second communication apparatus, refer to the foregoing content of setting the first quantity of times.

W3: Continuous duration in which the confidence level of the channel information determined by the first communication apparatus by using the first model is less than or equal to the first threshold is greater than or equal to first duration.

For example, the first communication apparatus may include a first timer, and determine, through the first timer, the continuous duration in which the confidence level of the channel information determined by the first communication apparatus by using the first model is less than or equal to the first threshold. For brevity of description, in this embodiment of this application, the continuous duration in which the confidence level of the channel information determined by the first communication apparatus by using the first model is less than or equal to the first threshold is referred to as third duration. For a manner of setting the first timer by the first communication apparatus, refer to the foregoing content of setting the first counter.

The second communication apparatus may determine whether the third duration is greater than or equal to the first duration. If the third duration is greater than or equal to the first duration, it may be determined to perform deactivation processing on the first model, switch the first model to the second model, or update the first model. If the third duration is less than the first quantity of times, it may be determined not to deactivate the first model, switch the first model, or update the first model. For a manner of obtaining the third duration by the second communication apparatus, refer to the foregoing content of obtaining the first duration.

An example in which the third duration is T_max and a current counting result of the first timer is n is used below for description.

If the second communication apparatus determines that the confidence level is less than or equal to the first threshold, the timer is started, and the count n is equal to 1. If the confidence level that is of the first model, that is fed back by the first communication apparatus, and that is received by the second communication apparatus for N_max consecutive times is less than or equal to the first threshold, that is, n=N_max, it is determined to deactivate the first model. If the confidence level fed back by the first communication apparatus is greater than the first threshold within T_max, or optionally, the confidence level fed back by the first communication apparatus for N_min consecutive times is greater than the first threshold, the second communication apparatus determines not to perform deactivation processing on the first model. In this case, the first timer is reset immediately, that is, n is set to 0.

W4: Continuous duration in which the confidence level of the channel information determined by the first communication apparatus by using the first model is greater than or equal to the first threshold is less than or equal to second duration]

For example, the second communication apparatus may include a second timer, and determine, through the second timer, the continuous duration in which the confidence level is greater than or equal to the first threshold. For brevity of description, in this embodiment of this application, the continuous duration in which the confidence level is greater than or equal to the first threshold is referred to as fourth duration. For a manner of setting the second timer by the second communication apparatus, refer to the foregoing content of setting the first counter by the first communication apparatus.

The second communication apparatus may determine whether the fourth duration is less than or equal to the second duration. If the fourth duration is less than or equal to the second duration, it may be determined to deactivate the first model, switch the first model to the second model, or update the first model. If the fourth duration is greater than the second duration, it may be determined not to perform deactivation processing on the first model, switch the first model, or update the first model. For a manner of obtaining the second duration by the second communication apparatus, refer to the foregoing content of setting the first quantity of times.

In the foregoing possible implementation, a decrease in the confidence level of the first model may be an unexpected situation. In the foregoing implementation, the first model is not immediately deactivated once the confidence level of the first model decreases, and instead, when the confidence level of the first model is less than the first threshold for a plurality of times and/or is less than the first threshold for a long period of time, the first model is deactivated, the first model is switched, or the first model is updated. In this way, a case in which the first model is inaccurately deactivated due to an unexpected state can be avoided, and a procedure of deactivating, switching, or updating the first model can also be prevented from being performed frequently.

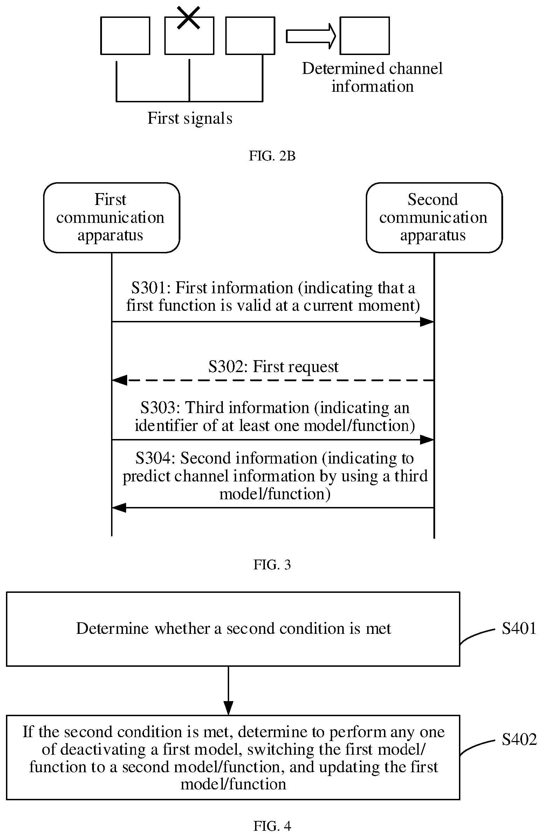

The following describes beneficial effects of the foregoing implementation by using an example with reference to a diagram of determining channel information by using a first model shown in FIG. 2B. As shown in FIG. 2B, the first communication apparatus determines an input of the first model based on three first signals, and obtains, based on the input of the first model, the channel information determined based on the first model. However, one of the three first signals is inaccurate due to an unexpected situation (in FIG. 2B, "×" represents that the unexpected situation occurs on the first signal). Consequently, the input of the first model is also inaccurate. As a result, a current confidence level of the first model is less than the first threshold. In the foregoing implementation, when the second communication apparatus determines that the quantity of times that the confidence level of the first model is less than the first threshold is 1, deactivation or the like may not be immediately performed on the first model. In this way, in the foregoing implementation, a case in which the first model is frequently deactivated, switched, or updated due to unexpected situations can be avoided. This helps reduce a quantity of times of interaction between the second communication apparatus and the first communication apparatus.

After receiving the second information, the first communication apparatus may manage the one or more models based on the second information. If content of the second information is different, procedures performed by the first communication apparatus may also be different. Descriptions are separately provided below.

K1: The second information indicates the content shown in P1. To be specific, the second information indicates to deactivate the first model.

In this case, the first communication apparatus may perform deactivation processing (or operation) on the first model.

K2: The second information indicates the content shown in P2. To be specific, the second information indicates to determine the channel information by continuing using the first model.

In this case, the first communication apparatus may determine the channel information by continuing using the first model.

Optionally, in this case, the first communication apparatus may further send, to the second communication apparatus, the channel information determined based on the first model.

For example, if the first model is a model for predicting CSI, the first communication apparatus may send, to the second communication apparatus, the CSI determined based on the first model. If the first model is a model for compressing CSI, the first communication apparatus may send, to the second communication apparatus, compressed CSI determined based on the first model.

K3: The second information indicates the content shown in P3. To be specific, the second information indicates to update the first model.

In this case, the first communication apparatus may negotiate with a model training system to update the first model. Alternatively, the first communication apparatus may negotiate with the second communication apparatus to update the first model. Alternatively, the first communication apparatus may update the first model. For specific content of updating the first model, refer to the foregoing descriptions.

K4: The second information indicates the content shown in P4. To be specific, the second information indicates to enhance the first signal.

In this case, the first communication apparatus may receive an enhanced first signal, and determine the channel information based on the enhanced first signal.

K5: The second information indicates the content shown in P5. To be specific, the second information indicates to retrain the model used to determine the channel information.

In this case, the first communication apparatus may negotiate with a model training system to retrain the model. Alternatively, the first communication apparatus may negotiate with the second communication apparatus to retrain the model.

K6: The second information indicates the content shown in P6. To be specific, the model used by the first communication apparatus to determine the channel information is to be switched from the first model to the second model.

In this case, the first communication apparatus may determine the channel information by using the second model.

K7: The second information indicates the content shown in P7. To be specific, the second information indicates to stop triggering the procedure related to the first function.

In this case, the first communication apparatus does not start the procedure related to the first function, or stops the procedure related to the first function.

K8: The second information indicates the content shown in P8. To be specific, the second information indicates to stop triggering the procedure related to the second function.

In this case, the first communication apparatus does not start the procedure related to the second function, or stops the procedure related to the second function.

K9: The second information indicates the content shown in P9. To be specific, the second information indicates that the first resource is invalid.

In this case, the first communication apparatus may give up sending, on the first resource, the channel information determined based on the any model.

K10: The second information indicates the content shown in P10. To be specific, the second information indicates that the another resource is invalid.

In this case, the first communication apparatus may discard the another resource. For example, if the another resource is a resource used by the first communication apparatus to receive the first signal, the first communication apparatus may give up receiving the first signal on the another resource.

K11: The second information indicates the content shown in P11. To be specific, the second information indicates to update the UCI from the first UCI to the second UCI.

In this case, the first communication apparatus may send the second UCI instead of the first UCI.

If the second information indicates at least two of P1 to P11, the first communication apparatus may perform procedures that are in K1 to K11 and that are corresponding to content shown in at least two of P1 to P11 indicated by the second information.

In a possible implementation, when the second information further indicates the first communication apparatus to determine the channel information by using the third model, the first communication apparatus may determine the channel information by using the third model.

Optionally, when the second information may further indicate the fourth resource, after receiving the second information, the first communication apparatus may further send, on the fourth resource, the channel information determined based on the third model.

In another possible implementation, the first communication apparatus starts timing after sending the first information. If the second information fed back by the second communication apparatus is not received within sixth duration, the first communication apparatus may determine a strategy. For a manner of determining the strategy by the first communication apparatus, refer to the foregoing content of determining the strategy by the second communication apparatus. For content of the strategy, also refer to the foregoing content of the strategy. Details are not described herein. The sixth duration may be determined through negotiation between the first communication apparatus and the second communication apparatus, or may be preconfigured or predefined in the first communication apparatus and the second communication apparatus.

For example, the first communication apparatus may be provided with a timer. After sending the first information, the first communication apparatus may start the timer. When the timer is triggered, if the first communication apparatus has not received the second information from the second communication apparatus, the first communication apparatus may determine the strategy. Timing duration of the timer may be set to the sixth duration. Optionally, the first communication apparatus may further execute the strategy.

In this embodiment of this application, the first communication apparatus may send the first information to the second communication apparatus. Because the first communication apparatus can accurately determine the state of the first function and/or the state of the second function based on a requirement of the first communication apparatus, the second communication apparatus can accurately obtain the state of the first function and/or the state of the second function, and can more accurately determine the strategy for managing the model. Correspondingly, this helps accurately manage the model. In addition, the first information may further indicate the state of the first function and/or the state of the second function at the future moment, so that the second communication apparatus can determine the strategy for managing the model in a more timely manner. The model can also be managed in a more timely manner. In addition, the first information may further indicate the confidence level of the first model, so that the second communication apparatus can determine, based on more information, the strategy for managing the model. This helps manage the model more accurately. In addition, before determining that the strategy indicates to deactivate the first model, the second communication apparatus may determine whether the confidence level of the first model is less than or equal to the first threshold for a specific quantity of times or specific duration, to avoid inaccurate deactivation of the first model, and reduce frequency of model switching by the first communication apparatus. This helps reduce interaction between the first communication apparatus and the second communication apparatus.

To improve accuracy of model management, an embodiment of this application further provides a communication method. In this method, if a first function of a first communication apparatus changes from invalid to valid, the first communication apparatus may send third information to a second communication apparatus. The third information indicates at least one model applicable to the first communication apparatus for determining channel information. In this way, the second communication apparatus can accurately determine a strategy based on a state of the first function and the at least one model. In other words, in this method, the strategy is related to the state of the first function and the third information. This improves accuracy of the determined strategy and helps accurately manage the model.

FIG. 3 is a schematic flowchart of a communication method according to an embodiment of this application. The schematic flowchart includes the following steps.

S301: A first communication apparatus sends first information to a second communication apparatus. Correspondingly, the second communication apparatus receives the first information from the first communication apparatus.

In this embodiment of this application, an example in which the first function is valid at a current moment is used. Correspondingly, the first information in this embodiment of this application indicates that the first function is valid at the current moment. For content of the first function and a manner of sending the first information, refer to the content in the embodiment shown in FIG. 2A.

S302: The second communication apparatus sends a first request to the first communication apparatus. Correspondingly, the first communication apparatus receives the first request from the second communication apparatus. For a meaning of the first request, refer to the content in the embodiment shown in FIG. 2A.

Optionally, the first communication apparatus may actively indicate, to the second communication apparatus, at least one model that is applicable to the first communication apparatus for determining channel information. In this case, the second communication apparatus does not need to perform step S302. In other words, step S302 is an optional step, and is shown by using a dashed line in FIG. 3.

S303: The first communication apparatus sends third information to the second communication apparatus. Correspondingly, the second communication apparatus receives the third information from the first communication apparatus.

For example, the third information indicates an identifier of the at least one model or configuration information of the at least one model. For content of the identifier of the at least one model, content of the configuration information of the at least one model, and content of determining the at least one model by the first communication apparatus, refer to the content in the embodiment shown in FIG. 2A.

S304: The second communication apparatus sends second information to the first communication apparatus. Correspondingly, the first communication apparatus receives the second information from the second communication apparatus.

For example, the second information indicates a strategy for managing one or more models. The strategy indicates to determine the channel information by using a third model. The third model belongs to the at least one model.

Optionally, the second information may further indicate a resource (namely, a fourth resource) used by the first communication apparatus to send the channel information determined based on the third model.

In a possible implementation, after receiving the second information, the first communication apparatus may determine the channel information by using the third model. In addition, when the second information further indicates the fourth resource to the first communication apparatus, the first communication apparatus may further subsequently send, on the fourth resource, the channel information determined based on the third model.

In this embodiment of this application, the second communication apparatus can accurately determine the strategy based on the state of the first function and the at least one model. This improves accuracy of the determined strategy, and helps accurately manage the model. In addition, the second communication apparatus can determine a model of the channel information for the first communication apparatus in a timely manner, so that the first communication apparatus can determine the channel information in a timely manner by using the model. In addition, the second communication apparatus may further indicate, to the first communication apparatus in a timely manner, a resource for sending the determined channel information, so that the first communication apparatus can send the determined channel information in a timely manner. In addition, a case in which the second communication apparatus triggers a procedure related to the first function when the first function of the first communication apparatus is invalid at the current moment can be avoided, and resources of the first communication apparatus and the second communication apparatus can be saved.

To improve accuracy of model management, an embodiment of this application provides a communication method. In this communication method, whether a second condition is met may be determined. If the second condition is met, it is determined to deactivate a first model, switch the first model to a second model, or update the first model. The second condition is related to a confidence level of the first model. In this communication method, whether to deactivate the first model or switch the first model to the second model is determined based on whether the confidence level of the first model is less than or equal to a first threshold for a specific quantity of times and/or specific duration. This helps improve accuracy of managing the first model. In addition, the communication method may be performed by the first communication apparatus. In this way, the first communication apparatus can manage the first model without interacting with the second communication apparatus, to reduce interaction between the first communication apparatus and the second communication apparatus.

FIG. 4 is a schematic flowchart of a communication method according to an embodiment of this application. The schematic flowchart includes the following steps. In FIG. 4, an example in which a first communication apparatus performs the communication method is used for description.

S401: The first communication apparatus determines whether a second condition is met.

For content of the second condition, refer to the content in the embodiment shown in FIG. 2A.

S402: If the second condition is met, the first communication apparatus determines to perform any one of deactivating a first model, switching the first model to a second model, and updating the first model.

That the first communication apparatus determines to deactivate the first model may be that the first communication apparatus is to perform deactivation processing on the first model or the first communication apparatus indicates a device other than the first communication apparatus to perform deactivation processing on the first model. Similarly, that the first communication apparatus determines to switch the first model to the second model may alternatively be that the first communication apparatus is to switch the first model to the second model or the first communication apparatus indicates the device other than the first communication apparatus to switch the first model to the second model. Similarly, that the first communication apparatus determines to update the first model may alternatively be that the first communication apparatus is to update the first model or the first communication apparatus indicates the device other than the first communication apparatus to update the first model.

For content of deactivating the first model, switching the first model to the second model, and updating the first model, also refer to the content in the embodiment shown in FIG. 2A.

The example in which the first communication apparatus performs the communication method is used above for description. The foregoing communication method may alternatively be performed by the second communication apparatus. For content of performing the communication method by the second communication apparatus, refer to the foregoing content of performing the communication method by the first communication apparatus. Optionally, when the second communication apparatus performs the foregoing communication method, in S401, the second communication apparatus may obtain a confidence level of the first model from the first communication apparatus, and determine whether the second condition is met.

Optionally, in S402, after determining to deactivate the first model, the second communication apparatus may indicate the first communication apparatus to deactivate the first model. Alternatively, after determining to switch the first model to the second model, the second communication apparatus may indicate the first communication apparatus to determine channel information by using the second model. Alternatively, after determining to switch the first model to the second model, the second communication apparatus may indicate the first communication apparatus to update the first model.

In this embodiment of this application, whether to deactivate the first model or switch the first model to the second model is determined based on the confidence level of the first model, so that accuracy of managing the first model can be improved. In addition, after the confidence level of the first model is less than or equal to a first threshold for a specific quantity of times and/or specific duration, it is determined to deactivate the first model or switch the first model to the second model. In this way, improper deactivation of the first model and switching of the first model can be avoided, to improve the accuracy of managing the first model. In addition, when the communication method is performed by the first communication apparatus, the first communication apparatus can directly manage the first model. This helps reduce interaction between the first communication apparatus and the second communication apparatus.

To improve accuracy of model management, an embodiment of this application provides a communication method. In this communication method, a first communication apparatus may send third UCI to a second communication apparatus. The third UCI includes first information, and the first information indicates at least one of a state of a first function of the first communication apparatus, a state of a second function, and a confidence level of a first model. The second communication apparatus determines, based on the at least one of the state of the first function, the state of the second function, and the confidence level, a strategy for managing one or more models. In this way, the second communication apparatus determines a strategy based on information from the first communication apparatus, to manage the one or more models more accurately.

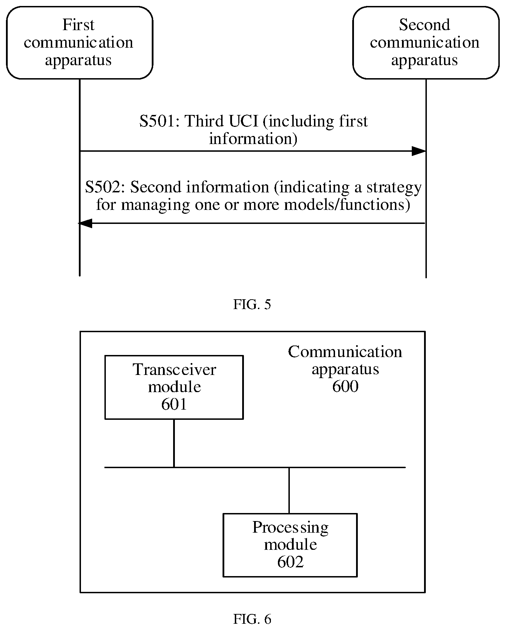

FIG. 5 is a schematic flowchart of a communication method according to an embodiment of this application. The schematic flowchart includes the following steps.

S501: A first communication apparatus sends third UCI to a second communication apparatus. Correspondingly, the second communication apparatus receives the third UCI from the first communication apparatus.

For example, the third UCI includes first information. The first information indicates at least one of a state of a first function of the first communication apparatus, a state of a second function, and a confidence level of channel information determined based on a first model.

S502: The second communication apparatus sends second information to the first communication apparatus. Correspondingly, the first communication apparatus receives the second information from the second communication apparatus.

For example, the second information indicates a strategy for managing one or more models.

When the first information indicates the state of the first function and/or the state of the second function and the confidence level of the first model, for content of determining the second information (or the strategy) by the second communication apparatus, refer to the content in the embodiment shown in FIG. 2A.

For example, when the first information indicates the confidence level of the first model, and the second communication apparatus determines that the confidence level of the first model is greater than a first threshold, the second information may indicate to perform at least one of: determining, by the first communication apparatus, the channel information by continuing using the first model; updating the first model; enhancing a first signal; deactivating the first model; or switching a model used by the first communication apparatus to determine the channel information from the first model to a second model.

Alternatively, if the confidence level of the channel information determined based on the first model is less than or equal to the first threshold, the second information may indicate to perform at least one of: determining, by the first communication apparatus, the channel information by continuing using the first model; updating the first model; enhancing the first signal; deactivating the first model; and switching the model used by the first communication apparatus to determine the channel information from the first model to the second model.

In a possible implementation, after receiving the second information, the first communication apparatus may manage the one or more models based on the indication of the second information.

In this embodiment of this application, the second communication apparatus determines, based on the at least one of the state of the first function, the state of the second function, and the confidence level, the strategy for managing the one or more models. Because the state of the first function, the state of the second function, and the confidence level are all sent by the first communication apparatus, the state of the first function, the state of the second function, and the confidence level are more valuable for reference. This helps the second communication apparatus more accurately determine the strategy for managing the one or more models, and helps manage the models more accurately. In addition, the first information indicating the at least one of the state of the first function, the state of the second function, and the confidence level is carried in the UCI, so that the first communication apparatus does not need to send the first information by using dedicated information, to reduce interaction between the first communication apparatus and the second communication apparatus.

An embodiment of this application provides a communication apparatus. FIG. 6 is a diagram of a structure of a communication apparatus according to an embodiment of this application.

As shown in FIG. 6, the communication apparatus 600 includes a transceiver module 601 and a processing module 602.

In a first embodiment, the communication apparatus 600 may implement a function of the first communication apparatus in the embodiment shown in FIG. 2A. Correspondingly, the communication apparatus 600 may also implement a step performed by the first communication apparatus in the embodiment shown in FIG. 2A.

For example, under control of the processing module 602, the transceiver module 601 may send first information to a second communication apparatus, and receive second information from the second communication apparatus. For content of the first information and the second information, refer to the content in the embodiment shown in FIG. 2A.

In a second embodiment, the communication apparatus 600 may implement a function of the second communication apparatus in the embodiment shown in FIG. 2A. Correspondingly, the communication apparatus 600 may also implement a step performed by the second communication apparatus in the embodiment shown in FIG. 2A.

For example, under control of the processing module 602, the transceiver module 601 may receive first information from a first communication apparatus, and send second information to the first communication apparatus. For content of the first information and the second information, refer to the content in the embodiment shown in FIG. 2A.

In a third embodiment, the communication apparatus 600 may implement a function of the first communication apparatus in the embodiment shown in FIG. 3. Correspondingly, the communication apparatus 600 may also implement a step performed by the first communication apparatus in the embodiment shown in FIG. 3.

For example, under control of the processing module 602, the transceiver module 601 may send first information to a second communication apparatus, send third information to the second communication apparatus, and receive second information from the second communication apparatus. For content of the first information, the second information, and the third information, refer to the content in the embodiment shown in FIG. 3. Optionally, the transceiver module 601 may further receive, under control of the processing module 602, a first request from the second communication apparatus. For content of the first request, also refer to the content in the embodiment shown in FIG. 3.

In a fourth embodiment, the communication apparatus 600 may implement a function of the second communication apparatus in the embodiment shown in FIG. 3. Correspondingly, the communication apparatus 600 may also implement a step performed by the second communication apparatus in the embodiment shown in FIG. 3.

For example, under control of the processing module 602, the transceiver module 601 may receive first information from a first communication apparatus, receive third information from the first communication apparatus, and send second information to the first communication apparatus. For content of the first information, the second information, and the third information, refer to the content in the embodiment shown in FIG. 3. Optionally, the transceiver module 601 may further send, under control of the processing module 602, a first request to the first communication apparatus. For content of the first request, also refer to the content in the embodiment shown in FIG. 3.

In a fifth embodiment, the communication apparatus 600 may implement a function of the first communication apparatus in the embodiment shown in FIG. 4. Correspondingly, the communication apparatus 600 may also implement a step performed by the first communication apparatus in the embodiment shown in FIG. 4.

For example, the processing module 602 is configured to: determine whether a second condition is met, and when the second condition is met, determine to deactivate a first model or switch the first model to a second model.

In a sixth embodiment, the communication apparatus 600 may implement a function of the second communication apparatus in the embodiment shown in FIG. 4. Correspondingly, the communication apparatus 600 may also implement a step performed by the second communication apparatus in the embodiment shown in FIG. 4.

For example, the processing module 602 is configured to: determine whether a second condition is met, and when the second condition is met, determine to deactivate a first model or switch the first model to a second model. Optionally, the transceiver module 601 is configured to receive confidence level of the first model from a first communication apparatus.

In a seventh embodiment, the communication apparatus 600 may implement a function of the first communication apparatus in the embodiment shown in FIG. 5. Correspondingly, the communication apparatus 600 may also implement a step performed by the first communication apparatus in the embodiment shown in FIG. 5.

For example, under control of the processing module 602, the transceiver module 601 may send third UCI to a second communication apparatus, and receive second information from the second communication apparatus. For content of the third UCI and the second information, refer to the foregoing content.

In an eighth embodiment, the communication apparatus 600 may implement a function of the second communication apparatus in the embodiment shown in FIG. 5. Correspondingly, the communication apparatus 600 may also implement a step performed by the second communication apparatus in the embodiment shown in FIG. 5.

For example, under control of the processing module 602, the transceiver module 601 may receive third UCI from a first communication apparatus, and send second information to the first communication apparatus. For content of the third UCI and the second information, refer to the foregoing content.

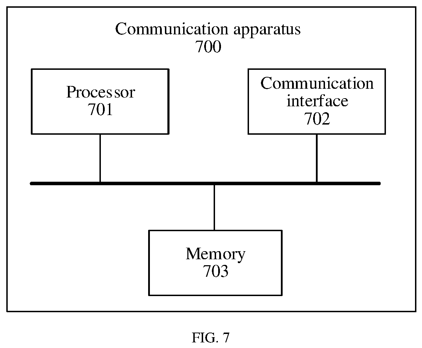

An embodiment of this application provides a communication apparatus. FIG. 7 is a diagram of a structure of a communication apparatus according to an embodiment of this application.

As shown in FIG. 7, the communication apparatus 700 includes a processor 701 and a communication interface 702. The processor 701 and the communication interface 702 may be coupled. It may be understood that the communication interface 702 may be a transceiver or an input/output interface. The processor 701 and the communication interface 702 may implement any one of the foregoing communication methods, for example, the communication method described in any one of FIG. 2A and FIG. 3 to FIG. 5.

For example, the communication apparatus 700 may be configured to implement a function of the first communication apparatus in FIG. 2A. Alternatively, the communication apparatus 700 may be configured to implement a function of the second communication apparatus in FIG. 2A. Alternatively, the communication apparatus 700 may be configured to implement a function of the first communication apparatus in FIG. 3. Alternatively, the communication apparatus 700 may be configured to implement a function of the second communication apparatus in FIG. 3. Alternatively, the communication apparatus 700 may be configured to implement a function of the first communication apparatus in FIG. 4. Alternatively, the communication apparatus 700 may be configured to implement a function of the second communication apparatus in FIG. 4. Alternatively, the communication apparatus 700 may be configured to implement a function of the first communication apparatus in FIG. 5. Alternatively, the communication apparatus 700 may be configured to implement a function of the second communication apparatus in FIG. 5.

Optionally, the communication apparatus 700 may further include a memory 703, configured to store instructions executed by the processor 701, or store input data needed by the processor 701 to run the instructions, or store data generated after the processor 701 runs the instructions.

The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of this application provides a chip system. The chip system includes a processor and an interface. The processor is configured to invoke instructions from the interface and run the instructions. When executing the instruction, the processor implements any one of the foregoing communication methods, for example, the communication method described in any one of FIG. 2A and FIG. 3 to FIG. 5.

An embodiment of this application provides a computer-readable storage medium. The computer-readable storage medium is configured to store a computer program or instructions. When the computer program or the instructions are run, any one of the foregoing communication methods, for example, the communication method described in any one of FIG. 2A and FIG. 3 to FIG. 5, is implemented.

An embodiment of this application provides a computer program product including instructions. When the computer program product runs on a computer, any one of the foregoing communication methods, for example, the communication method described in any one of FIG. 2A and FIG. 3 to FIG. 5, is implemented.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any storage medium in another form that is well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first communication apparatus, wherein the method comprises:
sending first information to a second communication apparatus, wherein the first information indicates a state of a first function of the first communication apparatus and/or a state of a second function of the first communication apparatus, the first function is a function of determining channel information based on any model, the second function is a function of determining the channel information based on a first model, the state comprises valid or invalid, and the state indicates states/a state of the first function at a current moment and/or a future moment and states/a state of the second function at the current moment and/or a future moment; and
receiving second information from the second communication apparatus, wherein the second information indicates a strategy for managing one or more models, the strategy is related to the state of the first function and/or the state of the second function, the one or more models are used to determine the channel information, and the one or more models comprise the any model and/or the first model.

2. The method according to claim 1, wherein if the first information indicates that the second function is valid at the future moment and the current moment, the strategy indicates to perform at least one of the following: determining, by the first communication apparatus, the channel information by continuing using the first model; updating the first model; enhancing a first signal, wherein the first signal is used to determine an input of the first model; deactivating the first model; and switching a model used by the first communication apparatus to determine the channel information from the first model to a second model; or
if the first information indicates that the first function is invalid at the future moment or the current moment, the strategy indicates to perform at least one of the following: deactivating the first model; and stopping triggering a procedure related to the first function, wherein the procedure related to the first function comprises at least one of the following: a procedure of switching the first model; a procedure of updating the first model; a procedure of retraining a model used to determine the channel information; and a procedure of enhancing the first signal; or
if the first information indicates that the first function is valid at the current moment and the second function is invalid at the future moment or the current moment, the strategy indicates to perform at least one of the following: deactivating the first model; switching a model used by the first communication apparatus to determine the channel information from the first model to a second model; a procedure of retraining a model used to determine the channel information; and stopping triggering a procedure related to the second function, wherein the procedure related to the second function comprises a procedure of updating the first model and/or a procedure of enhancing the first signal.

3. The method according to claim 1 or 2, wherein if the first information indicates that the first function is invalid at the future moment or the current moment, the second information further indicates that a first resource is invalid and/or another resource is invalid, the first resource is used by the first communication apparatus to send the channel information determined based on the any model, and the another resource is a resource related to the first function other than the first resource; and/or indicates to update uplink control information UCI sent by the first communication apparatus from first UCI to second UCI, wherein the first UCI indicates the channel information determined based on the any model, and the second UCI does not indicate the channel information determined based on the any model; or
if the first information indicates that the second function is invalid at the future moment or the current moment, the second information further indicates that a first resource is invalid and/or another resource is invalid, the first resource is used by the first communication apparatus to send the channel information determined based on the first model, and the another resource is a resource related to the first function other than the first resource; and/or indicates to update uplink control information UCI sent by the first communication apparatus from first UCI to second UCI, wherein the first UCI indicates the channel information determined based on the first model, and the second UCI does not indicate the channel information determined based on the first model.

4. The method according to claim 1, wherein before the receiving second information from the second communication apparatus, the method further comprises:
if the state of the first function is updated from invalid to valid, sending third information to the second communication apparatus, wherein the third information indicates an identifier of at least one model or model-related configuration information, the model-related configuration information is used to determine the at least one model, the at least one model comprises a model applicable to the first communication apparatus for determining the channel information, the strategy is further related to the at least one model, the strategy indicates the first communication apparatus to determine the channel information by using a third model, and the third model belongs to the at least one model.

5. The method according to claim 1, wherein the first information further indicates a confidence level of the channel information determined based on the first model, and the strategy is further related to the confidence level.

6. The method according to claim 5, wherein if the first information indicates that the second function is valid at the current moment and the future moment and the confidence level is less than or equal to a first threshold, the strategy indicates to perform at least one of the following: determining, by the first communication apparatus, the channel information by continuing using the first model; updating the first model; enhancing a first signal, wherein the first signal is used to determine an input of the first model; deactivating the first model; or switching a model used by the first communication apparatus to determine the channel information from the first model to a second model; or
if the first information indicates that the second function is valid at the current moment and the future moment and the confidence level is greater than a first threshold, the strategy indicates to perform at least one of the following: determining, by the first communication apparatus, the channel information by continuing using the first model; updating the first model; enhancing the first signal; deactivating the first model; or switching a model used by the first communication apparatus to determine the channel information from the first model to a second model.

7. The method according to any one of claims 1 to 6, wherein the method further comprises:
if a first condition is met, determining that the second function is invalid at the current moment, wherein the first condition comprises:
the first communication apparatus does not support running of the first model; and/or
the confidence level of the channel information determined by the first communication apparatus by using the first model is less than a second threshold.

8. The method according to any one of claims 1 to 7, wherein the sending first information to a second communication apparatus comprises:
sending third UCI to the second communication apparatus, wherein the third UCI comprises the first information; or
sending the first information to the second communication apparatus on a second resource, wherein the second resource is related to a resource for sending third UCI by the first communication apparatus.

9. The method according to any one of claims 1 to 8, wherein the one or more models comprise any one of the following models:
a model used to determine channel state information CSI;
a model used to determine a beam;
a model used to determine a channel type; or
a model used to determine information about compressed CSI; or
a model used to compress CSI.

10. A communication method, applied to a second communication apparatus, and comprising:
receiving first information from a first communication apparatus, wherein the first information indicates a state of a first function of the first communication apparatus and/or a state of a second function of the first communication apparatus, the first function is a function of determining channel information based on any model, the second function is a function of determining the channel information based on a first model, the state comprises valid or invalid, and the state indicates states/a state of the first function at a current moment and/or a future moment and states/a state of the second function at the current moment and/or a future moment; and
sending second information to the first communication apparatus, wherein the second information indicates a strategy for managing one or more models, the strategy is related to the state of the first function and/or the state of the second function, the one or more models are used to determine the channel information, and the one or more models comprise the any model and/or the first model.

11. The method according to claim 10, wherein if the first information indicates that the second function is valid at the future moment and the current moment, the strategy indicates to perform at least one of the following: determining, by the first communication apparatus, the channel information by continuing using the first model; updating the first model; enhancing a first signal, wherein the first signal is used to determine an input of the first model; deactivating the first model; or switching a model used by the first communication apparatus to determine the channel information from the first model to a second model; or
if the first information indicates that the first function is invalid at the future moment or the current moment, the strategy indicates to perform at least one of the following: deactivating the first model; and stopping triggering a procedure related to the first function, wherein the procedure related to the first function comprises at least one of the following: a procedure of switching the first model; a procedure of updating the first model; a procedure of retraining a model used to determine the channel information; and a procedure of enhancing the first signal; or
if the first information indicates that the first function is valid at the current moment and the second function is invalid at the future moment or the current moment, the strategy indicates to perform at least one of the following: deactivating the first model; switching a model used by the first communication apparatus to determine the channel information from the first model to a second model; a procedure of retraining a model used to determine the channel information; and stopping triggering a procedure related to the second function, wherein the procedure related to the second function comprises any one of a procedure of updating the first model and/or a procedure of enhancing the first signal.

12. The method according to claim 10 or 11, wherein if the first information indicates that the first function is invalid at the future moment or the current moment, the second information further indicates that a first resource is invalid and/or another resource is invalid, the first resource is used by the first communication apparatus to send the channel information determined based on the any model, and the another resource is a resource related to the first function other than the first resource; and/or indicates to update uplink control information UCI sent by the first communication apparatus from first UCI to second UCI, wherein the first UCI indicates the channel information determined based on the any model, and the second UCI does not indicate the channel information determined based on the any model; or
if the first information indicates that the second function is invalid at the future moment or the current moment, the second information further indicates that a first resource is invalid and/or another resource is invalid, the first resource is used by the first communication apparatus to send the channel information determined based on the first model, and the another resource is a resource related to the first function other than the first resource; and/or indicates to update uplink control information UCI sent by the first communication apparatus from first UCI to second UCI, wherein the first UCI indicates the channel information determined based on the first model, and the second UCI does not indicate the channel information determined based on the first model.

13. The method according to claim 10, wherein if the first information indicates that the first function is updated from invalid to valid, and before the sending second information to the first communication apparatus, the method further comprises:
receiving third information from the first communication apparatus, wherein the third information indicates an identifier of at least one model or model-related configuration information, the model-related configuration information is used to determine the at least one model, and the at least one model comprises a model applicable to the first communication apparatus for determining the channel information; and
the strategy is further related to the at least one model, the strategy indicates the first communication apparatus to determine the channel information by using a third model, and the third model belongs to the at least one model.

14. The method according to claim 10, wherein the first information further indicates a confidence level of the channel information determined based on the first model, and the strategy is further related to the confidence level.

15. The method according to claim 14, wherein if the first information indicates that the second function is valid at the current moment and the future moment and the confidence level is less than or equal to a first threshold, the strategy indicates to perform at least one of the following: determining, by the first communication apparatus, the channel information by continuing using the first model; updating the first model; enhancing a first signal, wherein the first signal is used to determine an input of the first model; deactivating the first model; switching a model used by the first communication apparatus to determine the channel information from the first model to a second model; and retraining at least one of the model used to determine the channel information; or
if the first information indicates that the second function is valid at the current moment and the future moment and the confidence level is greater than a first threshold, the strategy indicates to perform at least one of the following: determining, by the first communication apparatus, the channel information by continuing using the first model; updating the first model; enhancing the first signal; deactivating the first model; or switching a model used by the first communication apparatus to determine the channel information from the first model to a second model.

16. The method according to any one of claims 10 to 15, wherein the first information further indicates a confidence level of the channel information determined by the first communication apparatus based on the first model, and before the sending second information to the first communication apparatus, the method further comprises:
determining that a second condition is met, wherein the second condition comprises at least one of the following:
a cumulative quantity of times that the confidence level is less than or equal to the first threshold is greater than or equal to a first quantity of times;
a cumulative quantity of times that the confidence level is greater than the first threshold is less than or equal to a second quantity of times;
continuous duration in which the confidence level is less than or equal to the first threshold is greater than or equal to first duration; and
continuous duration in which the confidence level is greater than the first threshold is less than or equal to second duration.

17. The method according to any one of claims 10 to 16, wherein the receiving first information from a first communication apparatus comprises:
receiving third UCI from the first communication apparatus, wherein the third UCI comprises the first information; or
receiving the first information from the first communication apparatus on a second resource, wherein the second resource is related to a resource for receiving third UCI from the first communication apparatus.

18. The method according to any one of claims 10 to 17, wherein the one or more models comprise one of the following:
a model used to determine channel state information CSI;
a model used to determine a beam;
a model used to determine a channel type;
a model used to compress information about CSI; or
a model used to compress CSI.

19. A communication method, applied to a first communication apparatus, wherein the method comprises:
if a state of a first function is updated from invalid to valid, sending first information to a second communication apparatus, wherein the first information indicates that the first function is valid at a current moment, and the first function is a function of determining channel information by the first communication apparatus based on any model;
sending third information to the second communication apparatus, wherein the third information indicates an identifier of at least one model or model-related configuration information, the model-related configuration information is used to determine the at least one model, and the at least one model comprises a model applicable to the first communication apparatus for determining the channel information; and
receiving second information from the second communication apparatus, wherein the second information indicates a strategy for managing one or more models, the strategy is related to the first function and the at least one model, the strategy indicates the first communication apparatus to determine the channel information by using a second model, the second model belongs to the at least one model, the one or more models are used to determine the channel information, and the one or more models comprise the any one model.

20. A communication method, applied to a second communication apparatus, wherein the method comprises:
receiving first information from a first communication apparatus, wherein the first information indicates that a first function is valid at a current moment, and the first function is a function of determining channel information by the first communication apparatus based on any model;
receiving third information from the first communication apparatus, wherein the third information indicates an identifier of at least one model or model-related configuration information, the model-related configuration information is used to determine the at least one model, and the at least one model comprises a model applicable to the first communication apparatus for determining the channel information; and
sending second information to the first communication apparatus, wherein the second information indicates a strategy for managing one or more models, the strategy is related to the first function and the at least one model, the strategy indicates the first communication apparatus to determine the channel information by using a second model, the second model belongs to the at least one model, the one or more models are used to determine the channel information, and the one or more models comprise the any one model.

21. A communication method, comprising:
determining whether a second condition is met, wherein the second condition comprises at least one of the following:
a cumulative quantity of times that a confidence level of channel information determined based on a first model is less than or equal to a first threshold is greater than or equal to a first quantity of times;
a cumulative quantity of times that the confidence level is greater than the first threshold is less than or equal to a second quantity of times;
continuous duration in which the confidence level is less than or equal to the first threshold is greater than or equal to first duration; and
continuous duration in which the confidence level is greater than the first threshold is less than or equal to second duration; and
if the second condition is met, determining to perform any one of: deactivating the first model, switching the first model to a second model to determine the channel information, and updating the first model, wherein the first model is a model for currently determining the channel information.

22. A communication method, comprising:
sending third uplink control information UCI, wherein the third UCI comprises first information, the first information indicates at least one of a state of a first function of a first communication apparatus, a state of a second function, and a confidence level of channel information determined based on a first model, the first function is a function of determining the channel information based on any model, the second function is a function of determining the channel information based on the first model, the state comprises valid or invalid, and the state indicates states/a state of the first function at a current moment and/or a future moment and states/a state of the second function at the current moment and/or a future moment; and
receiving second information, wherein the second information indicates a strategy for managing one or more models, the strategy is related to the at least one of the state of the first function, the state of the second function, and the confidence level, the one or more models are used to determine the channel information, and the one or more models comprise the first model.

23. A communication method, comprising:
receiving third uplink control information UCI, wherein the third UCI comprises first information, the first information indicates at least one of a state of a first function of a first communication apparatus, a state of a second function, and a confidence level of channel information determined based on a first model, the first function is a function of determining the channel information based on any model, the second function is a function of determining the channel information based on the first model, the state comprises valid or invalid, and the state indicates states/a state of the first function at a current moment and/or a future moment and states/a state of the second function at the current moment and/or a future moment; and
sending second information, wherein the second information indicates a strategy for managing one or more models, the strategy is related to the at least one of the state of the first function, the state of the second function, and the confidence level, the one or more models are used to determine the channel information, and the one or more models comprise the first model.

24. A communication apparatus, comprising a module configured to implement the method according to any one of claims 1 to 23.

25. A communication apparatus, comprising a processor and a communication interface, wherein the communication interface is configured to receive a signal from another apparatus other than the communication apparatus and transmit the signal to the processor, or send a signal from the processor to another apparatus other than the communication apparatus, and the processor executes code instructions by using a logic circuit, to implement the method according to any one of claims 1 to 23.

26. A computer program product comprising instructions, wherein when the instructions are run by a communication apparatus, the communication apparatus is enabled to perform the method according to any one of claims 1 to 23.

27. A computer-readable storage medium, wherein the storage medium stores a computer program or instructions, and when the computer program or the instructions are executed by a communication apparatus, the method according to any one of claims 1 to 23 is implemented.
